(19) Europäisches Patentamt
European Patent Office
Office européen des brevets

(11) **EP 4 411 635 A1**

(12) **EUROPEAN PATENT APPLICATION**

(43) Date of publication:
**07.08.2024 Bulletin 2024/32**

(21) Application number: **23154545.0**

(22) Date of filing: **01.02.2023**

(51) International Patent Classification (IPC):
**G06T 7/13** *(2017.01)* **G06T 7/12** *(2017.01)*

(52) Cooperative Patent Classification (CPC):
**G06T 7/12;** G06T 2207/10064; G06T 2207/10068;
G06T 2207/10121; G06T 2207/20096;
G06T 2207/20132; G06T 2207/30096

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **RIJKSUNIVERSITEIT GRONINGEN**
**9712 CP Groningen (NL)**
• **Academisch Ziekenhuis Groningen**
**9713 GZ Groningen (NL)**

(72) Inventors:
• **VAN DER ZAAG, Pieter Jan**
**9747 AG Groningen (NL)**
• **KEIZERS, Bas**
**9713 GZ Groningen (NL)**
• **NIJBOER, Thomas Sebastiaan**
**9713 GZ Groningen (NL)**
• **VOSKUIL, Floris Jan**
**9713 GZ Groningen (NL)**

(74) Representative: **V.O.**
**P.O. Box 87930**
**2508 DH Den Haag (NL)**

(54) **IMAGE PROCESSING DEVICE AND MEDICAL TREATMENT DEVICE INCLUDING THE SAME**

(57) An image processing device (1) is disclosed herein to process a fluorescent image obtained from a tissue of a subject being irradiated with excitation light, which tissue is rendered photosensitive with a fluorescent agent, the fluorescent image (FI) comprising an array of pixels having respective fluorescent signal values. The image processing device is configured to identify transition positions where zero-crossings in a modified contrast to noise ratio vector ($CNR_{LM}(...)$) occur and based on the identified transition positions to indicate a border in the fluorescent image that is representative for a margin between tumor containing tissue and healthy tissue, wherein the contrast to noise ratio vector ($CNR_{LM}(...)$) is defined as:

$$CNR_{LM}(p) = \frac{F_L(p) - F_B - c \cdot S}{c \cdot S}$$

Therein $F_L(...)$ is a fluorescent signal vector for a scan trajectory L in the fluorescent image FI of which respective values are an indication of a magnitude of the fluorescent signal in the fluorescent image FI at respective positions p of the scan trajectory L, $F_B$ is a reference fluorescent signal being an average value of reference fluorescent signal values of the fluorescent image, S is a standard deviation of the reference fluorescent signal values and c is a predetermined constant.

FIG. 1

**Description**

BACKGROUND

The present application pertains to an image processing device.

The present application further pertains to a medical treatment device including an image processing device.

Treatment for most types of solid cancers consists of a radical surgical resection of all tumor tissue. However, differentiation between normal and tumor tissue intraoperatively remains difficult. Therefore, it is not uncommon that a tumor-positive margin is found during pathology assessment two to five days after surgery. According to literature, rates of tumor-positive margins (TPM) range from 10 to 35 percent depending on tumor type. See e.g. Orosco, R. K. et al. Positive surgical margins in the 10 most common solid cancers. Sci. Rep. 8, 56-86 (2018). https://doi.org/10.1038/s41598-018-23403-5. If tumor tissue is present at, or near, the rim of the resected tissue, the risk of local recurrence and distant metastasis is increased which implies a decrease in survival. Consequently, a TPM necessitates additional treatment such as re-operation, radiation therapy and/or systemic therapy. Unfortunately, this is associated with increased morbidity and higher psychological burden to the patient. Therefore, it is crucial to be able to correctly visualize tumor tissue during surgery, however, current optical techniques as well as visual and tactile information obtained by the practitioner are not sufficient to adequately determine tumor margins. Therefore, new techniques in which real-time tumor visualization is obtained are investigated, aiming to reduce the number of TPMs and thereby decrease additional treatments and morbidity.

One of the imaging techniques gaining interest is fluorescence molecular imaging (FMI) because of the possibility for real-time tumor visualization deployed both in the patient (i.e. in-vivo) and immediately after excision (ex-vivo). Therewith the tissue to be inspected is prepared with a fluorescent agent, either by administering the fluorescent agent (FA) to the patient or by impregnating the tissue therewith. The fluorescent agent (FA) may be an untargeted fluorescent dye such as Indocyanine green (ICG) , or a targeted fluorescent dyes for imaging tumor tissue and infection and track medicinal therapy. Even though research into FMI in the near-infrared (NIR) spectral range (700-900 nm) has showed promising results, it has been found that there are still complications. For example, scattering of light and absorbance by biological components such as water and blood contribute to attenuation of the excitation light, therewith causing a decrease in sensitivity and contrast of the fluorescence images. These factors may contribute to false-positive TPMs on fluorescence images, even though no TPM is present in the patient. Therewith the obtained fluorescent image (FI) is not always directly suitable as a guidance for the surgeon or other medical specialist or for use with a medical treatment device.

SUMMARY

According to a first object, an image processing device is provided to process a fluorescent image obtained from a tissue of a subject so as to facilitate a specialist or a surgery device to perform a therapy.

According to a second object a medical treatment device including such an image processing device is provided.

The image processing device according to the first aspect is configured to process a fluorescent image obtained from a tissue of a subject. The tissue is irradiated with excitation light, after it is rendered photosensitive with a fluorescent agent, and the fluorescent image obtained from the irradiated photosensitive tissue comprises an array of pixels having respective fluorescent signal values. The fluorescent agent serves to visualize different types of tissue such as tumor tissue and tumor free tissue. In one example the fluorescent agent is a targeted fluorescent tracer such as Cetuximab-IRDye800CW or hexvix for imaging tumor tissue and/or infection and track medicinal therapy, which can be administered to the patient or may be used to impregnate the tissue. In another example, the fluorescent agent is an untargeted fluorescent dye such as Indocyanine green (ICG) for imaging tissue perfusion. The excitation light with which the tissue is to be irradiated, in-vivo or ex-vivo is typically in the infra-red range.

At present, different types of imaging systems are commercially available. A first type operates in the near-infrared (NIR) spectral range (700-900 nm). A second type operates in the shortwave infrared (SWIR) spectral range (1000-1700 nm). The second type of imaging systems is thought to yield higher contrast images and deeper tissue penetration compared to the NIR range, because of more limited autofluorescence and sharply reduced scattering.

The image processing device provided herein is configured to perform the following operations for determining an indication of a border in the fluorescent image between a target region representing a portion of the tissue comprising a tumor and a reference region outside the target region:

The image processing device obtains respective fluorescent signal vectors for respective scan trajectories. Respective series of values of a respective fluorescent signal vector are an indication of a magnitude of the fluorescent signal in the fluorescent image at respective positions of the scan trajectory. For computational efficiency, the scan trajectories extend along a line, and may therefore be denoted as scanlines. However, other scan trajectories, e.g. curved trajectories may be contemplated too.

The image processing device subsequently evaluates respective modified contrast to noise ratio vectors CNR$_{LM}$(...) for respective fluorescent signal vectors F$_L$(...). For each scan trajectory L values of a respective contrast to noise ratio vector CNR$_{LM}$(...) are computed for respective positions p of the scan trajectory L as:

$$CNR_{LM}(p) = \frac{F_L(p) - F_B - c \cdot S}{c \cdot S}$$

Therein F$_B$ is a reference fluorescent signal being an average value of reference fluorescent signal values of the fluorescent image, S is a standard deviation of the reference fluorescent signal values taken from the background and c is a predetermined constant.

In an embodiment of the image processing device the predetermined constant c which is used to determine the modified contrast to noise ratio is approximately 2. Therewith results are obtained that closely match the border that would be identified by a pathologist examining the tissue. Also a value slightly smaller than 2, for example in the range of 1.5 and 2 may be selected. In that case the indicated border will extend outside the border that would be identified by a pathologist and therewith provide for a safety margin.

According to an alternative approach a contrast to noise ratio CNR$_L$(p) is determined with:

$$CNR_L(p) = \frac{F_L(p) - F_B}{c \cdot S}$$

Subsequently it is determined for which positions along the line L, the value of the contrast to noise ratio CNR$_L$(p) crosses a threshold 2/c.

The image processing device identifies a respective set of transition positions pt along each scan trajectory where the modified contrast to noise ratio vector CNR$_{LM}$(...) has a zero-crossing.

The image processing device generates a set of candidate border positions on the basis of the identified set of transition positions.

The image processing device generates an indication of the border between the target region and the reference region based on the set of candidate border positions obtained for the respective scan trajectories.

In an embodiment the image processing device (IPD) is configured to indicate the border as a primary curve that interconnects peripheral candidate border positions.

In another embodiment the image processing device is configured to indicate the border with a secondary curve that encloses a primary curve that interconnects the peripheral candidate border position, and that extends at a distance outside the primary curve dependent on the type of tumor present in the tissue. Guidelines for the distance to be selected i.e. the tumor-free margin depend on the type of tumor, and are presented in Table 1 of Voskuil et al. "Intraoperative imaging in pathology-assisted surgery", Nat Biomed Eng. 6 (2022) 503, https://doi.org/10.1038/s41551-021-00808-8. In a further elaboration of this embodiment the image processing device is configured to construct the secondary curve in a manner that avoids an intersection of specified anatomical structure(s).

In an embodiment of the image processing device the indication of the magnitude of the fluorescent signal in the fluorescent image at a position of the scan trajectory is an average value of fluorescent signal values of pixels in the fluorescent image within a one-dimensional window comprising that position and being directed transverse to a direction of the scan trajectory. This operation results in a magnitude indication with an improved signal to noise ratio in particular in case the scan trajectory crosses the border to be determined in a substantially transverse direction thereof. In a specific example the average value is determined as a weighted sum of the fluorescent signal values of the pixels within a one-dimensional window in accordance with a Gaussian function having its maximum at the position of the scan trajectory.

In an embodiment the image processing device is configured to repeat the following steps for each of a plurality of positions along the scan trajectory.

The image processing device tentatively assigns a position from the plurality of positions along the scan trajectory as a presumed point of the border of the target region.

The image processing device computes the reference fluorescent signal value as the average of the fluorescent signal values of the fluorescent signal vector corresponding to positions of the scan trajectory at a side of the tentatively assigned position.

The image processing device computes the standard deviation as the standard deviation of the fluorescent signal values along that side of the scan trajectory.

In an example a respective average fluorescent signal value is computed for the scan trajectory positions on the scan trajectory at each side of the tentatively assigned position and the side having the lowest average fluorescent signal value is presumed to be in the reference region. Hence, the lowest average fluorescent signal value is used as the reference fluorescent signal value and the standard deviation used is the standard deviation of the fluorescent signal values along the side of the scan trajectory with the lowest average fluorescent signal value.

The image processing device identifies the tentatively assigned position as a candidate border position if the modified contrast to noise ratio vector has a zero-crossing at the tentatively assigned position.

In this embodiment the plurality of positions may typically include all positions of the scan trajectory except the ends thereof, so that at least two signal values are available to estimate the standard deviation. In an example the image processing device is configured to perform a low-pass filtering of the modified contrast to noise ratio vector. Therewith occurrences of spurious zero-crossings are mitigated.

In an embodiment of the image processing device the respective scan trajectories comprise at least two scan trajectories with a mutually different direction. The candidate border positions will typically indicate positions where the scan trajectory crosses the border in a direction transverse to the scan trajectory. Accordingly, a more complete set of candidate border position is obtained with scan trajectories of mutually different directions. For example the scan trajectories comprise a first set of scan trajectories in a horizontal direction and a second set of scan trajectories in a vertical direction. This embodiment is computationally very efficient. At the cost of an increased computational effort, additional candidate border positions can be computed with a larger number of scan trajectory directions. For example sets of scan trajectories may be used for each direction being a multiple of n degrees, wherein n for example is 10.

As noted above, the image processing device may be applied both for in-vivo and ex-vivo analysis. In case the image processing device is used for ex-vivo analysis, the fluorescent image is obtained from a tissue sample that is taken from the subject and subsequently arranged on a background, typically a dark background. In an embodiment the image processing device is configured to identify an area in the fluorescent image that represents the tissue sample as the tissue area and to identify an area in the fluorescent image of the background as the background area. In an example of this embodiment the image processing device is further configured to determine a first maximum intensity in the target area of the fluorescent image, to determine a second maximum intensity along a scan trajectory and to skip further processing steps for the scan trajectory if the second maximum intensity is less than a predetermined fraction of the first maximum intensity.

In an embodiment the image processing device is alternatively or additionally configured to reject a candidate border position for further processing if an indicated value for the fluorescent intensity is less than a threshold value. The indicated value can be the intensity value of the fluorescent image at the location of the candidate border position to be decided about. However, a reduced noise sensitivity in this candidate border position filtering operation can be achieved in an implementation wherein the indicated value is the maximum of the fluorescent intensities within a window centered around the candidate border position. This is the value that is indicated by the "movmax" function, wherein the size of the window may be selected in a range of 2 to 10 pixels, for example 5 pixels.

In an embodiment the image processing device comprises a camera for obtaining a fluorescent image from tissue in a subject, and further comprising a display device to display the tissue and one or more indications of the border, e.g. as a primary curve and/or as a secondary curve that encloses the primary curve. This embodiment is particular suitable for use during treatment to guide the medical specialist in the process of excising the tumor or irradiating the tumor. In this case the patient to which the treatment is performed has been administered a fluorescent agent.

According to a second aspect of the present application a treatment device is provided for treating a subject that prior to treatment has been administered a fluorescent agent. The treatment device comprises an excitation light source for irradiating a tumor containing tissue in the subject with excitation light, a camera for obtaining a fluorescent image from the irradiated tissue an image processing device as specified above, and treatment equipment to perform a treatment to remove or reduce the tumor from the subject in accordance with the border as indicated by the image processing device. In one example, the treatment equipment is a surgery robot that excises the tumor from the tissue. In another example the treatment equipment is a therapeutic irradiation device that irradiates the tumor.

BRIEF DESCRIPTION OF THE DRAWINGS

These and other aspects of the present disclosure are described in more detail with reference to the drawings. Therein

FIG. 1 schematically shows an embodiment of an image processing device according to the first aspect;
FIG. 2 shows an exemplary module in another embodiment thereof;
FIG. 3 shows a further exemplary module;
FIG. 4 shows a part of the module of FIG.3 in more detail;
FIG. 5 shows a further embodiment of an image processing device according to the first aspect of the invention;

FIG. 6 shows an embodiment of a medical treatment device according to the second aspect;
FIG. 7A shows a fluorescent image captured from a tissue comprising a tumor;
FIG. 7B shows the result of a first conversion step applied to the fluorescent image;
FIG. 7C shows the result of a second conversion step applied to the result shown in FIG. 7B;
FIG. 8 illustrates a first data processing operation;
FIG. 9A and 9B show results obtained in a second data processing operation;
FIG. 10A, 10B, 10C illustrate aspects of a third data processing operation;
FIG. 11A and 11B illustrate results of variations of a fourth data processing operation;
FIG. 12A and 12B illustrate results of variations of a fifth data processing operation;
FIG. 13A and 13B illustrate results of variations of a fifth data processing operation;
FIG. 14 shows results of a sixth data processing operation;
FIG. 15 shows results of a seventh data processing operation;
FIG. 16 shows results of an eighth data processing operation;
FIG. 17 shows an indication of a border superposed on the fluorescent image of FIG. 7A;
FIG. 18A - 18F show first exemplary results derived with a fluorescent image obtained in vivo from tissue of a patient;
FIG. 19A - 19F show second exemplary results derived with a fluorescent image obtained from said tissue after ex vivo after it was completely resected from the patient;
FIG. 20A - 20F show third exemplary results derived from a fluorescent image obtained ex vivo from a slice of said resected tissue;
FIG. 21A - 21F show fourth exemplary results derived with a fluorescent image obtained in vivo from tissue of a further patient;
FIG. 22A - 22F show fifth exemplary results derived with a fluorescent image obtained ex vivo from the complete tissue resected from the patient;
FIG. 23A - 23F show sixth exemplary results derived with a fluorescent image obtained ex vivo from a slice of the resected tissue;
FIG. 24A - 24F show seventh results derived with a fluorescent image obtained from a slice of tissue.

DETAILED DESCRIPTION OF EMBODIMENTS

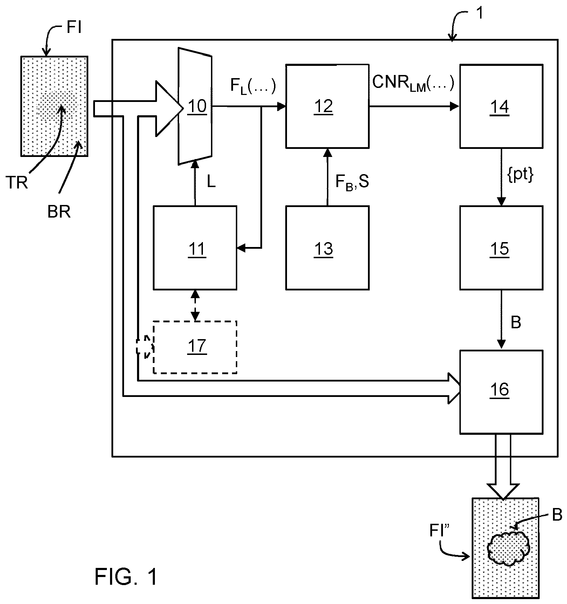

FIG. 1 schematically shows an image processing device 1 that is configured to process a fluorescent image FI of a tissue of a subject. The tissue is rendered photosensitive with a fluorescent agent, e.g. a contrast agent and is irradiated with excitation radiation. The fluorescent image FI so obtained comprises an array of pixels having respective fluorescent signal values. The image processing device 1 is configured for determining a border in the fluorescent image between a target region TR representing a portion of the tissue comprising a tumor and a reference region RR outside the target region.

The image processing device 1 has a signal vector retrieval module 10 configured to obtain respective fluorescent signal vectors $F_L(...)$ for respective scan trajectories L as indicated by scan trajectory selection module 11. Respective values of a fluorescent signal vector $F_L(...)$ indicate a magnitude of the fluorescent signal in the fluorescent image FI at respective positions p of the scan trajectory L.

A contrast to noise ratio computation module 12 computes a respective modified contrast to noise ratio vector $CNR_{LM}(...)$ for each fluorescent signal vector $F_L(...)$. The corresponding respective values contained in a contrast to noise ratio vector $CNR_{LM}(...)$ are computed from a fluorescent signal vector $F_L(...)$ for respective positions p of the scan trajectory L as

$$CNR_{LM}(p) = \frac{F_L(p) - F_B - c \cdot S}{c \cdot S}$$

Therein a statistic module 13 provides a reference fluorescent signal $F_B$ which is an average value of reference fluorescent signal values of the fluorescent image and a standard deviation S of the reference fluorescent signal values. Furthermore, c is a predetermined constant. For example c = 2.

Zero crossing detection module 14 identifies a respective set of transition positions {pt} along each scan trajectory. These are the positions where the modified contrast to noise ratio vector $CNR_{LM}(...)$ has a zero-crossing.

The scan trajectory selection module 11 selects a plurality of mutually different scan trajectories and for each selected scan trajectory a respective set of transition positions is determined.

The border indication module 15 subsequently indicates the border between the target region TR the reference region RR based on the sets of transition positions obtained for the respective scan trajectories.

In the embodiment shown, the image processing device 1 further comprises a display module 16, that generates a modified fluorescent image FI" wherein the border B indicated by the border indication module 15 is superposed on the original fluorescent image FI. In case the original fluorescent image FI is obtained in-vivo, this image can assist the surgeon in the process of excising the tumor or irradiating the tumor with therapeutic radiation.

The scan trajectory selection module 11 subsequently selects scan trajectories L from a set of scan trajectories and instructs the signal vector retrieval module 10 to obtain a fluorescent signal vector of which respective fluorescent signal vector values are an indication of a magnitude of the fluorescent signal in the fluorescent image FI at respective positions p of the scan trajectory L with respective coordinates $x_p$, $y_p$ in the fluorescent image FI. In one example the fluorescent signal vector values correspond to the magnitudes of the fluorescent signal in the fluorescent image FI at the respective positions p of the scan trajectory L. In another example the indication FL(p) of the magnitude of the fluorescent signal in the fluorescent image FI at the position of the scan trajectory L is an average value of fluorescent signal values of pixels in the fluorescent image FI within a one-dimensional window comprising the position with coordinates $x_p$, $y_p$ and being directed transverse to a direction of the scan trajectory. Accordingly

$$FL(p) = \sum_{q=-n}^{q=n} w_q FI(x_q, y_q) \text{ , wherein } \sum_{q=-n}^{q=n} w_q = 1$$

Therein the position $x_q=0$, $y_q=0$ coincides with the position $x_p$, $y_p$. By way of example the weight factors are mutually equal, i.e. $w_q = \dfrac{1}{2n+1}$ .

In a preferred embodiment the average value is a weighted sum of the fluorescent signal values of the pixels within the one-dimensional window in accordance with a Gaussian function or a similar weighting function having its maximum at the position p of the scan trajectory L.

When using the image processing device 1 in an intraoperative mode, the fluorescent image FI is obtained from a tissue sample taken from the subject and arranged on a background. In an embodiment the image processing device 1 comprises a foreground identification module 17 (indicated in dashed lines) with which the image processing device 1 is configured to identify an area in the fluorescent image that represents the tissue sample as the tissue area and to identify an area in the fluorescent image FI of the background as the non-tissue area. In an example of this embodiment the foreground identification module 17 (indicated by dashed lines) is further configured to determine a first maximum intensity in the tissue area of the fluorescent image FI, to determine a second maximum intensity along a scan trajectory and to skip further processing steps for the scan trajectory if the second maximum intensity is less than a predetermined fraction of the first maximum intensity.

In the embodiment of FIG. 1, it is presumed that reference fluorescent signal $F_B$ and the standard deviation S are predetermined values.

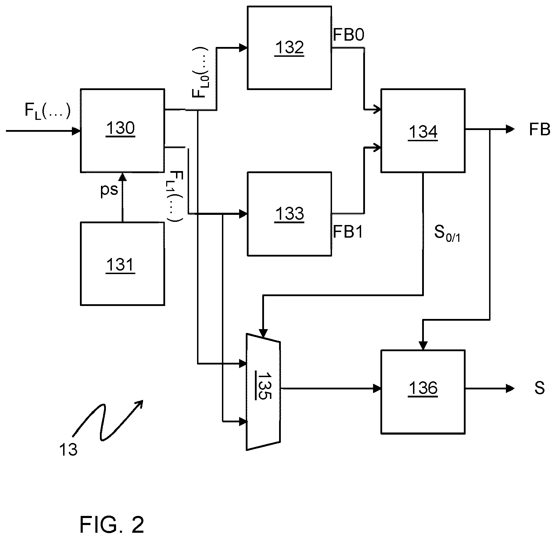

FIG. 2 shows an alternative embodiment for the statistic module 13 that dynamically determines these parameters $F_B$ and S as a function of the fluorescent signal vector data $F_L$.

The statistic module 13 comprises a vector splitting section 130 that splits the fluorescent signal vector $F_L$ (...) into a first portion $F_{L0}$ and a second portion $F_{L1}$. The first portion $F_{L0}$ comprises the fluorescent signal vector $F_L$ (...) data corresponding to a first side of the scan trajectory respective to a position ps of the scan trajectory that is tentatively assigned by position assigning section 131. The second portion $F_{L1}$ comprises the fluorescent signal vector $F_L$ (...) data corresponding to an opposite side of the scan trajectory respective to the position ps. Each of the portions may or may not include the fluorescent signal vector $F_L$ value for the position ps. A first average value computation section 132 computes the average value FB0 of the values of the first portion $F_{L0}$(...) of the fluorescent signal vector $F_L$ (...). Analogously, the second average value computation section 133 computes the average value FB1 of the values of the second portion $F_{L1}$(...) of the fluorescent signal vector $F_L$ (...). Alternatively a single section may subsequently compute these values FB0, FB1. Decision section 134 determines whether or not the value FB0 exceeds the value FB1. If this is the case it determines that FB = FB1. Otherwise it determines that FB = FB0. Decision section 134 also issues a control signal $S_{0/1}$ to data selector 135. In the first case, FB = FB1, it controls the data selector 135 to select the second portion $F_{L1}$(...) of the fluorescent signal vector $F_L$ (...) as the input for the standard deviation computation section 136 so as to compute the standard deviation S from the fluorescent signal data of the second portion $F_{L1}$(...) of the fluorescent signal vector $F_L$ (...). In the second case, FB = FB0, the data selector 135 is controlled to select the first portion $F_{L0}$(...) of the fluorescent signal vector $F_L$ (...) as the input. In an embodiment the position assigning section 131 assigns subsequent positions ps of the scan trajectory, and for each tentatively assigned position the corresponding parameters FB and S are determined and used to compute a respective modified contrast to noise ratio. In addition, zero crossing detection module 14 specifically selects those tentatively assigned positions as candidate border positions if the modified contrast to noise ratio vector ($CNR_{LM}$(...)) has a zero-crossing at the tentatively assigned position.

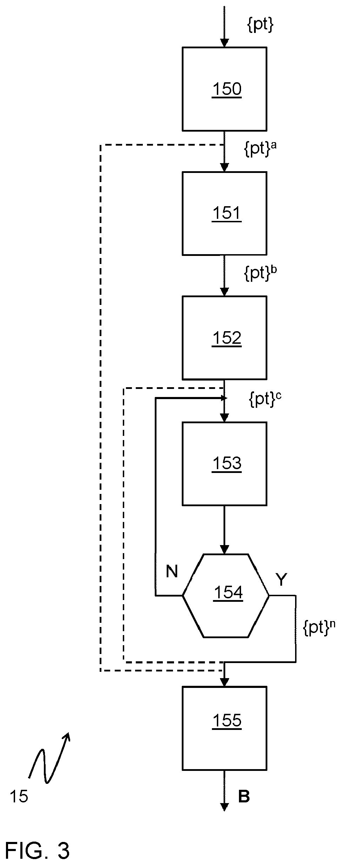

An embodiment of the border indication module 15 is shown in more detail in FIG. 3. The border indication module 15 shown therein comprises a candidate border position filter section 150 that is configured to reject a candidate border position for further processing if an indicated value for the fluorescent intensity is less than a threshold value. In an example the indicated value is the maximum of the fluorescent intensities within a window centered around the candidate border position to be decided about. In an example the maximum value is obtained from an auxiliary image FIa that is derived once from the original fluorescent image and stored for subsequent references. The auxiliary image FIa is for example derived in a two-pass procedure, wherein in a first pass for each pixel (x,y) the value FIh(x,y) is determined as

$$FIh(x, y) = max\{FI(x - w, y), ..., FI(x + w, y)\}$$

And in a second pass

$$FIa(x, y) = max\{FIh(x, y - w), ..., FIh(x, y + w)\}$$

In an example the threshold value is selected as a percentage of the maximum value over the complete fluorescent image FI. The percentage may be selected in a range of 10 - 80, more preferably in a range from 40 to 60% depending on the tissue being imaged. For a sample with a smooth surface, such as a bread loave slice of a tissue 40% is a suitable choice. For samples with a higher surface roughness the percentage should be higher. The size of the window 2w+1 is selected in a range from 2 to 10, wherein 5 was found to be optimal, i.e. corresponding to w = 2.

The embodiment of the border indication module 15 shown in FIG. 3 further comprises a candidate border position matching section 151 that matches candidate border positions obtained from each pair of scan trajectories that mutually overlap but have mutually opposite scan directions. The candidate border position matching section 151 verifies whether a candidate border position obtained with a first scan trajectory of the pair has a corresponding candidate border position in the second scan trajectory of the pair. The candidate border positions are considered to correspond if their associated positions in the fluorescent image do not exceed a threshold distance, e.g. 1 or 2 pixels. Furthermore, it may be required that the candidate border positions are of mutually opposite polarities. That is to say if one of them indicates a crossing of the border in the direction from the reference region to the target region, then the other one should indicate a crossing in the direction from the target region to the reference region.

In the embodiment shown, the border indication module 15 comprises a further candidate border position matching section 152 that matches pairs of mutually non-coinciding but neighboring candidate border positions obtained from mutually different scan trajectories, i.e. having a relative angle other than 0 or 180 degrees. The further candidate border position matching section 152 identifies pairs of a first candidate border position obtained from a first scan trajectory and a second candidate border position obtained from a second scan trajectory that have a Euclidian distance less than a predetermined maximum, e.g. 3 pixels and replaces the pair of mutually neighboring candidate border positions with a single replacement candidate border position centrally between the mutually neighboring candidate border positions. It is noted that instead of the Euclidian distance measure also a different distance measure may be taken, for example the L1 measure that computes the distance as the sum of the distances along each of the main direction of the image or the L∞ measure that defines the distance as the maximum one of the distances in the main direction.

In the embodiment shown, the border indication module also comprises a candidate border position merging section 153. The candidate border position merging section 153 receives the remaining set $\{pt\}^b$ of candidate border positions from the further candidate border position matching section 152 and merges mutually neighboring ones of the remaining candidate border positions. As indicated by backwards directed arrow "N" the candidate border position merging section 153 may perform this operation a plurality of times. The decision section 154 determines whether the iteration should be stopped "Y" or not "N". In one example the iteration takes place a predetermined number of times, e.g. 3 to 5 times. In another example the decision section 154 determines whether a data dependent stop criterion is complied with, e.g. the number of remaining candidate border positions is reduced to below a threshold value. The threshold value may be predetermined or may depend on other information. For example the threshold value is a constant times the square root of the total number of pixels within a convex hull comprising all remaining candidate border positions.

The border construction section 155 receives the set $\{pt\}^n$ of selected candidate border positions, based on the set of transition positions, from the candidate border position merging section 153 and constructs an indication of the border B.

In an example the border construction section 155 performs the MatLab function boundary (x,y,s). Therein the value s may be selected in a range of 0.1 - 1, typically in a range from 0.5 - 1. Best results were obtained a value selected in the range of 0.8 to 1. However the value s = 0.5, which is the default value also provides good results.

As shown by dashed lines in FIG. 3, in some examples the border indication module 15 is configured to skip one or more of the operations specified above. For example the border construction section 155 directly constructs a border from a filtered set {pt}ᵃ of candidate border positions retrieved from candidate border position filter section 150. In another example the border construction section 155 constructs a border from a set {pt}ᶜ of candidate border positions retrieved from further candidate border position matching section 152.

In one example the border construction section 155 is configured to indicate the border B as a primary curve that interconnects the peripheral transition positions.

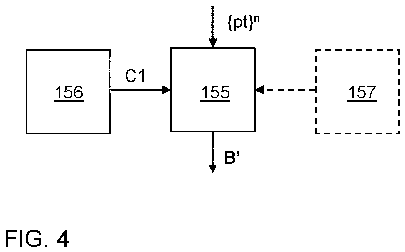

In another example as shown in FIG. 4, the border construction section 155 is configured to construct the border as a secondary curve B' that encloses a primary curve that interconnects the peripheral transition positions, and that extends at a distance outside the primary curve dependent on the type of tumor present in the tissue. To that end it receives a control signal C1 from a distance control section 156 that specifies the predetermined distance. In response thereto the border construction section 155 will indicate the border with a secondary curve B' that extends outside the primary curve such that the distance between each point of the secondary curve and the corresponding closest point of the primary curve is equal to the predetermined distance.

In a variation of the embodiment of FIG. 4 the border construction section 155 is further configured to construct the secondary curve in a manner that avoids an intersection of a specified anatomical structure. For that purpose, in that variation also a critical tissue protection section 157 is provided as shown in dashed lines in FIG. 4. The critical tissue protection section 157 comprises information about the location of critical tissues, such as vital organs and based on this information the border construction section 155 construct the secondary curve B' such that it extends by default outside the primary curve B at the predetermined distance, but locally at a smaller distance to avoid an intersection of vital organs.

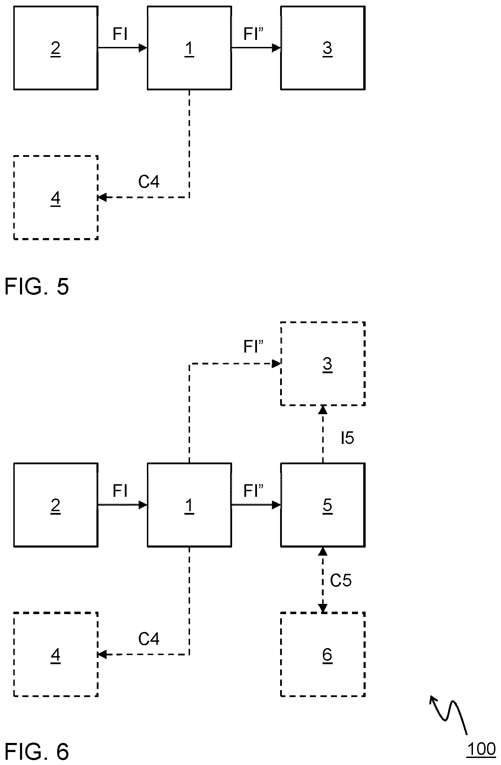

FIG. 5 shows an embodiment of the image processing device 1, that is particularly suitable for use as a tool during a treatment. Therewith it is presumed that the subject to be treated has been administered a fluorescent agent. In this embodiment the image processing device 1 for example the embodiment of FIG. 1 or a variation thereof, is further extended with a camera 2 for obtaining a fluorescent image FI from tissue to be treated in the patient, and with a display device 3 to display the tissue and the indication B of the border as shown in the modified fluorescent image FI". In a variation the image processing device 1 shows superposed on the fluorescent image the secondary curve B' as referred to above, optionally in combination with the indication by the primary curve B. In the example shown the image processing device 1 is further configured to issue control signals C4 to control an excitation light source 4, which is for example a near-infrared (NIR) or a short-wave infrared (SWIR) source. Therewith the image processing device 1 may control a wavelength and an intensity of the excitation light source 4 so as to optimize a contrast in the fluorescent image FI. Alternatively, a separate excitation light source 4 may be used having predetermined settings known to achieve good results.

FIG. 6 shows an embodiment of medical treatment device 100, that is suitable to automatically perform a medical treatment to a patient in order to treat a tumor present in a tissue. As in the case of FIG. 5, it is presumed that the subject to be treated has been administered a fluorescent agent. The medical treatment device 100 comprises in addition to the image processing device 1, for example the embodiment of FIG. 1 or a variation thereof, a camera 2 for obtaining a fluorescent image FI from the tissue with the tumor and medical treatment equipment 5 to perform a treatment to excise or irradiate the tumor in accordance with the indicated border. As in the embodiment of FIG. 5, the image processing device 1 may be further configured to issue control signals C4 to control an excitation light source 4, for example a near-infrared (NIR) or a short-wave infrared (SWIR) source. Even if the medical treatment device 100 is suitable to automatically perform a medical treatment it may be desired to monitor its operation. To that end a display device 3, as indicated by dashed lines, may be provided that displays the modified fluorescent image FI". In addition the medical treatment equipment 5 may provide an information signal I5 to the display device 3 to indicate a progress of the treatment. Also, the medical treatment equipment 5 may be coupled to a user interface 6 with which a medical specialist can fully or partly control the operation of the medical treatment equipment 5 via control signals C5.

EXAMPLE I

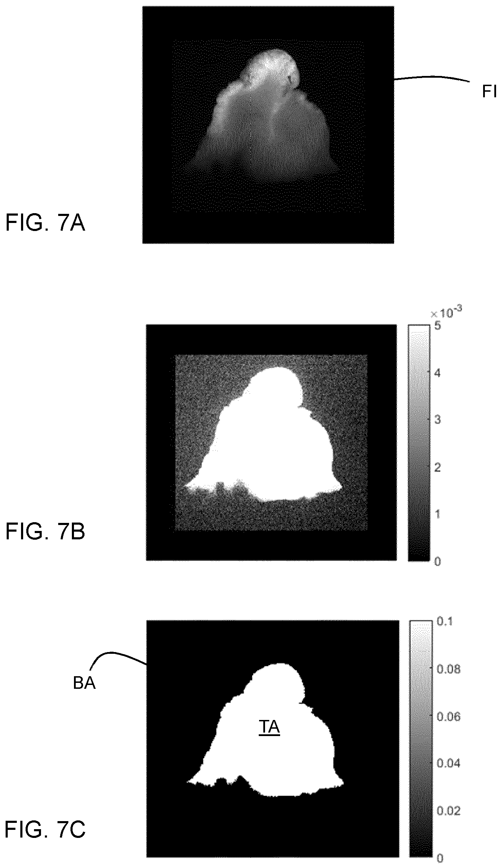

By way of example FIG. 7A shows a fluorescent image FI captured from a tissue comprising the tumor arranged on black background. In an example the fluorescent image has a width Nx of 400 pixels, a height Ny of 600 or 700 pixels and the resolution is for example in the order of 100 micron per pixel, e.g. 85 micron per pixel.

In the example shown, tissue from which the fluorescent image is obtained is a slice of the volume of tissue that is excised from a subject. The tumor in this case is a penile cancer and the subject was administered before treatment with cetuximab-IRDye800CW as a fluorescent agent.

Alternatively the fluorescent image is obtained from the excised volume of tissue, i.e. the resection-specimen itself.

In subsequent operations the image processing device 1 identifies a first area in the fluorescent image that represents the tissue sample as the tissue area and identifies an area in the fluorescent image FI of the background as the background area BA. In an example these operations are performed by the foreground identification module 17.

In a first exemplary operation the foreground identification module 17 converts the fluorescent image FI into a binary image, as shown in FIG. 7B, wherein pixels having an intensity in the fluorescent image exceeding a threshold value have a first binary value, represented as white pixels in FIG. 7B and the remaining pixels have a second binary value, represented are dark pixels in the figure. The threshold value to be selected for this purpose depends on the choice of the input device that provides the fluorescent image FI. For the PEARL imaging system the threshold maybe selected in the range of 0.001-0.01. For example a threshold value 0.005. For the SurgVision imaging system the threshold value may be selected in the range of 500-2000, for example a threshold value of about 800.

Areas formed by pixels with the first binary value are denoted candidate foreground areas. Areas formed by pixels with the second binary value are denoted candidate background areas.

Subsequently the foreground identification module 17 performs a dilation operation to dilate the candidate foreground areas. Typically a dilation by one pixel is sufficient to avoid that occasionally image data would be lost at edge portions of the tissue. As shown in FIG. 7B. due to noise, in addition to a single large candidate foreground area a plurality of small candidate foreground area is present. In order to mitigate this phenomenon, the foreground identification module 17 performs an additional operation wherein it selects the largest one of the candidate foreground areas as the foreground area TA representing the tissue. Therewith the result shown in FIG. 7C is obtained. The resulting binary image of FIG. 7C is used as a mask to indicate the boundary in the fluorescent image FI between the foreground area representing the tissue and the remaining background area therein.

In an example the foreground identification module 17 also determines the maximum intensity Imax,fg of the fluorescent image FI in the foreground area (denoted as TA in FIG. 7C). It could also be contemplated to determine the maximum intensity over the complete area of the fluorescent image FI. This would however be more sensitive to noise, as even in the background area isolated pixels might have a high intensity

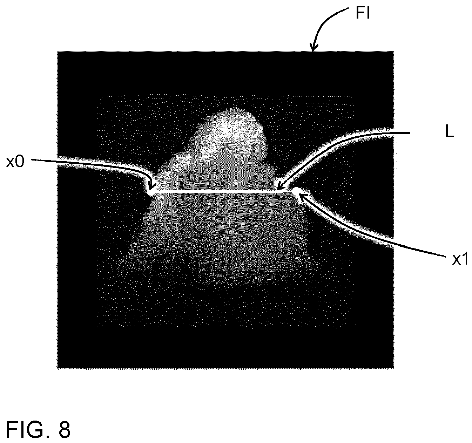

As shown in FIG. 8, the scanline selection module 11 constructs at least one scan trajectory L that extends through the foreground area TA (as shown in FIG. 7C) and that is delimited by the boundary with the background area. In the example shown the scan trajectory is a line extending in the horizontal direction between a first boundary with the background at a position x0 and a second boundary with the background at a position x1. Based on the indication L of the scan trajectory the signal vector retrieval module 10 obtains a fluorescent signal vector $F_L(...)$. Respective values of a fluorescent signal vector $F_L(...)$ indicate a magnitude of the fluorescent signal in the fluorescent image FI at respective positions p of the scan trajectory L. A constructed scan trajectory may represent a strip having a width that exceeds 1 pixel. In that case each value of the fluorescent signal vector $F_L(...)$ is a weighted sum of the intensities of the pixels within the width of the strip. I.e. if the line extends in a first direction x, the strip has a width in the direction y, and the weighted sum is computed of the pixels within the width of the strip having the same x-coordinate. The weighted sum can be a plain average wherein the weighting factor for each pixel is the same, but can alternatively be a gaussian weighting function. In case the foreground area is concave, more trajectories on a same line may be constructed that each have a respective pair of endpoints at a respective pair of points on the boundary. Experiments were performed for different values of the strip width in a range of 3 - 21 pixels. Best results were obtained for a strip width of 11 pixels, but other selections from this range were also found to be suitable.

In an example the scanline selection module 11 determines for each scan trajectory L the maximum of the values of the fluorescent signal vector $F_L(...)$which is denoted as Imax,ln. Also in this example it determines whether or not the maximum intensity Imax, ln is at least equal to a predetermined percentage, e.g. about 10%, of the maximum intensity Imax,fi of the foreground area of the fluorescent image as a whole.

Experiments were performed for various values of the predetermined percentage selected from 0, 1, 10, 33 and 50 %. Best results were obtained with 33 as the predetermined percentage.

If in this example, it is determined that the maximum intensity Imax, ln found among the values of the fluorescent signal vector $F_L(...)$ is less than the predetermined percentage of the maximum intensity Imax,fi the scan trajectory L is not selected for further processing. This deselection is based on the assumption that the lack of high intensity pixels along the scan trajectory indicates the absence of tumor tissue in the path through the tissue corresponding to the scan trajectory. The predetermined percentage may be selected in a range of 10% to 50%. Experiments indicated a percentage of 40 as optimal.

However, if it is determined that the maximum intensity Imax, ln found among the values of the fluorescent signal vector $F_L(...)$ is at least equal to the predetermined percentage of the maximum intensity Imax,fi, the contrast to noise ratio computation module 12 computes a modified contrast to noise ratio vector $CNR_{LM}(...)$ for a fluorescent signal vector $F_L(...)$. Based on the modified contrast to noise ratio vector $CNR_{LM}(...)$ data one or more positions are estimated where the scan trajectory traverses a border between a sub-area with healthy tissue and a sub-area with tumor tissue. A position where the scan trajectory traverses a border in the direction from a sub-area with healthy tissue to a sub-area with tumor tissue is characterized by a zero-crossing in a direction from a negative polarity to a positive polarity of the modified contrast to noise ratio vector $CNR_{LM}(...)$ and a position where the scan trajectory traverses a border in the direction from a sub-area with tumor tissue to a sub-area with healthy tissue is characterized by a zero-crossing in a direction from a positive polarity to a negative polarity.

In one example the contrast to noise ratio computation module 12 computes the contrast to noise ratio vectors $CNR_{LM}(...)$ based on respective predetermined values for the background intensity FB and the standard deviation S. This implementation is advantageous for the sake of a relatively low computational complexity. An alternative implementation with which the border can be determined with improved precision comprises the following procedure which is repeated for each pixel xs along the scan trajectory, excluding the ends of the scan trajectory. For simplicity it is presumed now that the scan trajectory extends in the x-direction and that the boundaries of the scan trajectory on the foreground with the background are x0, x1 respectively. Nevertheless, this description is equally applicable for arbitrary directions.

In this improved procedure it is presumed that the selected pixel xs coincides with the border, and that all pixels on the scan trajectory on a first side of the selected pixel xs represent tumor tissue and all pixels on the scan trajectory on a second side (opposite to the first side) of the selected pixel represent healthy tissue.

Based on this presumption, the vector splitting section 130 splits the fluorescent signal vector $F_L$ (...) into a first portion $F_{L0}$ and a second portion $F_{L1}$. The first portion $F_{L0}$ represents the portion of the scan trajectory between the first endpoint, here with x coordinate x0, and the tentatively assigned border position xs. The second portion $F_{L1}$ represents the portion of the scan trajectory between the tentatively assigned border position xs and the second endpoint, here with x coordinate x1.

Based on this presumption, the first average value computation section 132 computes an average value FB0 of the values of the first portion $F_{L0}$ of the fluorescent signal vector $F_L$ (...). Likewise the second average value computation section 133 computes an average value FB1 of the values of the second portion $F_{L1}$ of the fluorescent signal vector $F_L$ (...).

Hence if ps (here xs) is the tentatively selected position on the scan trajectory and p0 (here x0) and p1 (here x1) are the positions of the end pixels then at each side of that position ps the average value of the intensities is determined as follows.

$$FB0 = \frac{\sum_{p0}^{ps} FL(p)}{1 + ps - p0}$$

$$FB1 = \frac{\sum_{ps}^{p1} I(p)}{1 + p1 - ps}$$

The tumor is considered to be represented in the pixels of the scan trajectory at the side of ps having the highest average intensity. The pixels on the scan trajectory on the opposite side, having the lowest average intensity are considered to represent the background. This determined by decision section 134.

Based on this presumption the average value FB and the standard deviation S of the pixel values of the pixels on the scan trajectory on the second side of the selected pixel are computed.

Hence, if FB0 > FB1 then it is presumed that the tumor is represented in the range p0-ps and the value FB1 represents the presumed average background intensity level FB. In this case decision section 134 by means of selection signal $S_{0/1}$ causes data selector 135 to select the second portion $F_{L1}$ of the fluorescent signal vector $F_L$ (...) as the input for the standard deviation computation section 136. Accordingly in that case the standard deviation S is estimated as:

$$S = \sqrt{\frac{\sum_{ps}^{p1} FL^2(p) - FB^2}{p1 - ps}}$$

Alternatively, if FB0 $\leq$ FB1 then it is presumed that the tumor is represented in the range ps-p1 and the value FB0 represents the presumed average background intensity level FB. In this case decision section 134 by means of selection signal $S_{0/1}$ causes data selector 135 to select the first portion $F_{L0}$ of the fluorescent signal vector $F_L$ (...) as the input for the standard deviation computation section 136. Accordingly in that case the standard deviation S is estimated as:

$$S = \sqrt{\frac{\sum_{p0}^{ps} FL^2(p) - FB^2}{ps - p0}}$$

Based on values for the average background intensity FB and the standard deviation S, estimated for a tentatively assigned position ps, the contrast to noise ratio computation module 12 computes the modified contrast to noise ratio $CNR_{LM}(p)$ as

$$CNR_{LM}(p) = \frac{F_L(p) - FB - c \cdot S}{c \cdot S}$$

Accordingly, for each presumed ps a vector $CNR_{LM}(...)$ is obtained, resulting in a matrix wherein each row represents the values of $CNR_{LM}(...)$ computed for a particular tentatively assigned position ps.

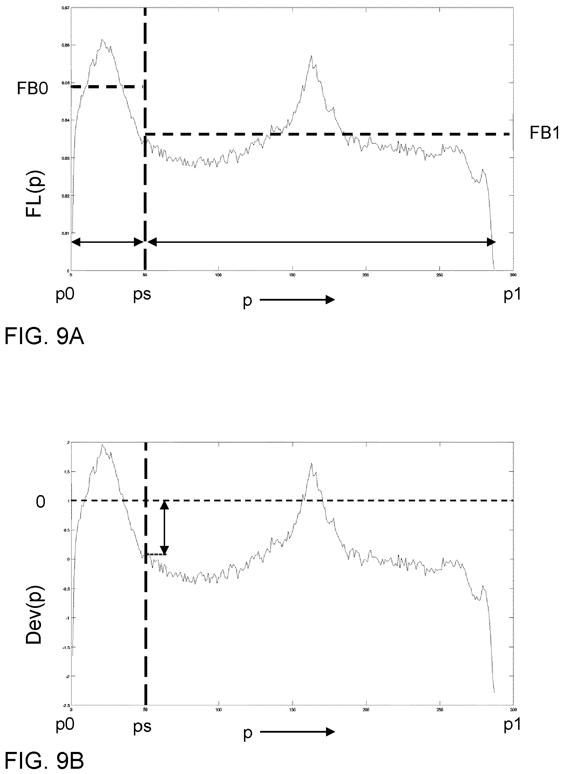

By way of example FIG. 9A shows the values of the fluorescent signal vector FL(p) along a scan trajectory and the computed average values FB0 and FB1 for the first and the second portion of the fluorescent signal vector FL(p) based on the tentatively selected position ps. In this example the value FB1 is less than the value FB0, and it is presumed that the portion p0-ps extends within the image area representing the tumor and the portion ps-p 1 extends within the area representing the healthy tissue. Accordingly, here the value FB1 is selected as the background value FB and the standard deviation S is computed from the values of the fluorescent signal vector FL(p) for the range ps-p1.

Therewith the modified contrast to noise ratio vector $CNR_{LM}(...)$ is computed from the values of the fluorescent signal vector FL(p) as shown in FIG. 9B.

With this input, the zero crossing detection module 14 determines for which values of the tentatively assigned position ps the modified contrast to noise ratio vector $CNR_{LM}(...)$ obtained for that position ps indeed has a zero-crossing. The corresponding positions of the scan trajectory in the fluorescent image FI are considered to represent candidate border positions. In the example shown in FIG. 9A, 9B, it can be seen that the modified contrast to noise ratio vector $CNR_{LM}(...)$ obtained for the tentatively assigned position ps does not have a zero-crossing at that position ps. Therewith this position ps is not considered as a candidate border position.

It is noted that a low pass filter may be applied to each modified contrast to noise ratio vector $CNR_{LM}(...)$ prior to identifying zero-crossings therein for the purpose of eliminating spurious zero-crossings resulting from noise. In an example the low pass filter has a normalized passband frequency of less than 0.5, typically less than 0.1. Optimum results were obtained with a normalized passband frequency of 0.045.

As such it is sufficient to determine only the presence of a zero-crossing at the position p of the modified contrast to noise ratio vector $CNR_{LM}(...)$ coinciding with the tentatively assigned position ps. I.e. it is sufficient to compute the modified contrast to noise ratio vector $CNR_{LM}(...)$ only in the neighborhood of the position ps, optionally taking into account a window of a low-pass filter. However, it can be advantageous to completely compute each modified contrast to noise ratio vector $CNR_{LM}(...)$, so that subsequent operations can be easily performed in parallel using a vector processor.

It is noted that output of the zero crossing detection module 14 may comprise a set with a plurality of candidate border positions {pt}. A set of candidate border positions may comprise a first candidate border position where the scan trajectory crosses the border in the direction from the area in the image representing the healthy tissue to the area representing the tumor containing tissue and a second candidate border position where the scan trajectory crosses the border in the direction from the area representing the tumor containing tissue to the area in the image representing the healthy tissue. The set may be empty if the scan trajectory does not enter the area representing the non-healthy tissue. In some cases the border of the image area representing the tumor containing tissue and the image area representing the healthy tissue is concave. In these cases the zero crossing detection module 14 may identify a plurality of pairs of candidate border positions for a scan trajectory.

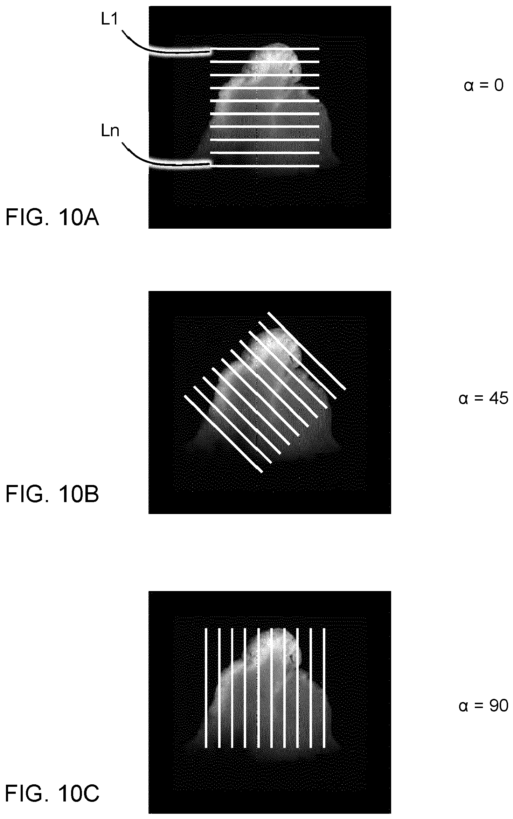

As shown in FIG. 10A, in operation the image processing device 1 performs the above-mentioned procedure for a plurality of scan trajectories L1,...Ln. A distance between the scan trajectories is typically related to the strip width as referred to above. The scan trajectories can be further apart if the width of the strip is larger. For example, the distance between the scan trajectories can be selected as equal to the strip width.

In some embodiments all scan trajectories are parallel. This complicates however the detection of a tissue border that extends in the same direction as the scan trajectories.

This can be avoided by performing the procedure with at least two sets of scan trajectories with a mutually different direction. In an example subsequent sets of scan trajectories have directions differing by 45 degrees. FIG. 10A, 10B, 10C show three of such sets. In another example the procedure is performed with two sets of scan trajectories in mutually orthogonal directions. In this case the choice of the directions x,y corresponds to the orientation of the principal axis in the fluorescent image, which is preferred for computational simplicity. Alternatively the procedure can be performed for a larger plurality of sets of scan trajectories, e.g. at angles of 0, 10, 20, .. degrees with respect to a principle axis of the fluorescent image. It is possible to perform the procedure with an even larger set of scanning angles, for example with scanning angles that mutually differ by 1 degree. This is, however, not preferred, as it involves an additional computational burden and does not substantially contribute to performance in terms of accuracy. For practical purposes a difference of 10 degrees was found to be optimal.

The total number of pixels of the scan trajectories should cover at least a predetermined fraction of the total number of pixels in the foreground area.

If a scan trajectory represents a strip of pixels, the predetermined fraction can be relatively small.

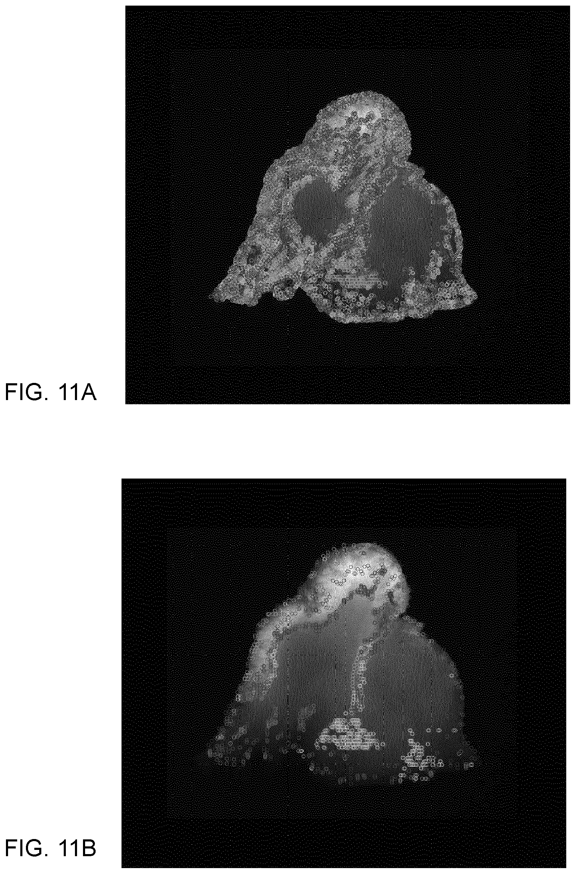

The zero crossing detection module 14 repeats the zero-crossing estimation procedure for all scan trajectories resulting in a plurality of candidate border positions of a border between healthy and non-healthy tissue. FIG. 11A shows the candidate border positions superposed on the original fluorescent image FI obtained with 36 sets of scan trajectories having angles differing by 10 degrees. FIG. 11B shows an alternative result obtained with 4 sets of scan trajectories having angles differing by 90 degrees.

Based on the set of candidate border positions obtained from the zero crossing detection module 14, the border indication module 15 generates an indication of the border between the area in the image that represents the tumor tissue and the area with the healthy tissue.

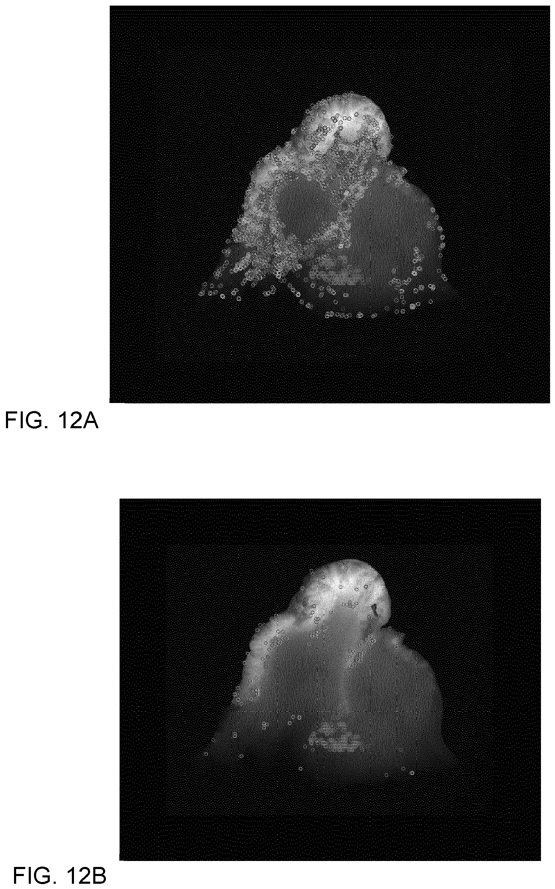

In an example the border indication module 15 compares candidate border positions of respective scan trajectories with candidate border positions of respective overlapping scan trajectories that extend in the opposite direction. In this example the border indication module 15 determines which candidate border positions of a first scan trajectory match with a candidate border position of the overlapping oppositely directed scan trajectory. A pair of candidate border positions is determined as matching if they coincide or are close to each other, that is their Euclidean distance is at most a distance threshold value, e.g. a value selected from the range of 1 to 10. Best results were obtained with a value in the range of 2-5. In case the mutually overlapping oppositely directed scan trajectories extend along a main coordinate axis x,y of the image the Euclidian distance measure reduces to the absolute difference between the coordinate values of the candidate border positions to be compared. In an implementation the border indication module 15 then eliminates those candidate border positions that do not have a matching candidate border position in the overlapping oppositely directed scan trajectory. Exemplary results of this operation are shown in FIG. 12A and FIG. 12B. FIG. 12A shows the result of the elimination procedure applied to the set of candidate border positions as shown in FIG. 11A obtained with the 36 sets of scan trajectories having angles differing by 10 degrees. FIG. 12B shows the result of the elimination procedure applied to the set of candidate border positions as shown in FIG. 11B obtained with the 4 sets of scan trajectories having angles differing by 90 degrees.

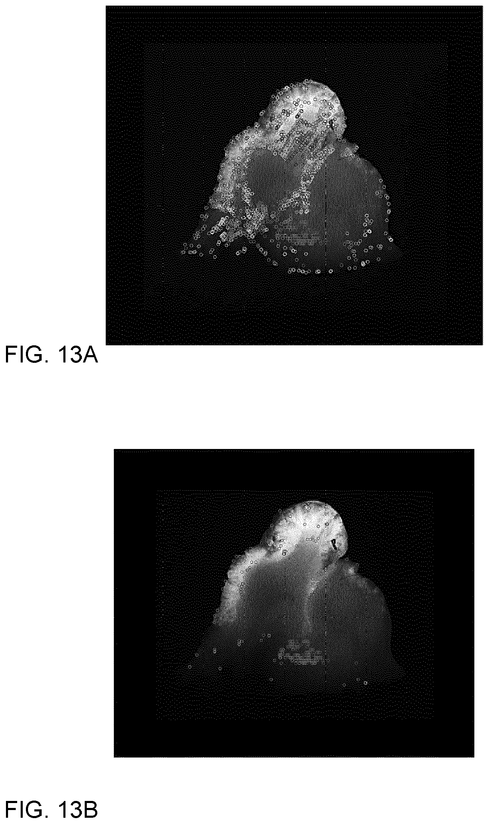

A further implementation of the border indication module 15 of this example also performs a merging operation. That is, if it detects a pair of candidate border positions obtained from a pair of mutually overlapping oppositely directed scan trajectories that do not coincide but that are close enough to comply with the distance threshold then it replaces the pair of candidate border positions with a single candidate border position having a position centered between the two original candidate border positions. Results of this operation are shown in FIG. 13A wherein the merging step is applied to the set of remaining candidate border positions as shown in FIG. 12A. Likewise FIG. 13B illustrates the results of the merging step applied to the set of remaining candidate border positions as shown in FIG. 12B.

In a variation the original candidate border positions are associated with a confidence indication. The confidence indication is based for example on the magnitude of the gradient found for the gradient of the fluorescent signal vector $F_L$ (...) of the scan trajectory with which the original candidate border position was obtained. A higher magnitude of the gradient is indicative for a higher confidence of the location of the border position. In an example the single candidate border position is located closer to the original candidate border position having the highest confidence indication.

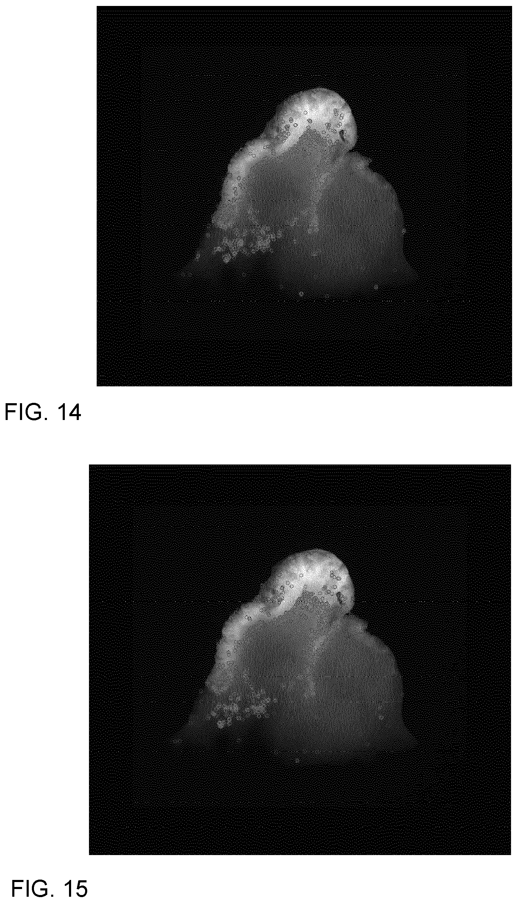

In an embodiment, the border indication module 15 performs an operation to eliminate isolated candidate border positions. In this embodiment the border indication module 15 identifies a candidate border position as an isolated candidate border position if there is no other candidate border position in the complete set of candidate border positions within a predetermined distance from that candidate border position. The predetermined distance may be the same as the predetermined distance in the previously mentioned operation wherein it is determined whether or not a candidate border position obtained with a scan trajectory matches a candidate border position of an overlapping scan trajectory in the opposite direction. Exemplary results of this elimination operation are shown in FIG. 14. In this example the elimination operation is applied to the set of remaining candidate border positions as shown in FIG. 13A.

In an embodiment the border indication module 15 performs an operation wherein it merges respective pairs of candidate border positions that are within a threshold distance from each other into a respective single candidate border position. Contrary to the merging procedure described for merging pairs of candidate border positions obtained from mutually overlapping oppositely directed scan trajectories, the present merging procedure is applied to any pair of candidate border positions in the available set of candidate border positions that are within the specified threshold distance for this operation. The specified threshold distance for this operation may also be selected from a range of 2-5. FIG. 15 show exemplary results for the case wherein the merging operation is applied to the sets of candidate border positions shown in FIG. 14. In this example the merging operation is applied once, but alternatively this operation is repeated a predetermined number of times or is repeated until a stop criterion is complied with, e.g. a criterion that the number of candidate border positions is reduced to a specified threshold number. In practice it was found that a one time merging step is sufficient. In order to reduce computational effort while maintaining acceptable results the merging operation may be skipped. Considering this, also the merging operation described with reference to FIG. 13A, 13B may be skipped.

Subsequently a border is constructed in the fluorescent image based on the set of candidate border positions obtained for the respective scan trajectories. This border is indicative for a margin in the tissue between the tumor and the healthy part of the tissue.

In an embodiment the constructed border is a primary curve that interconnects the peripheral candidate border positions. The primary curve in the fluorescent image is to indicate the edge of the high fluorescence area itself. In an example wherein the fluorescent image is obtained from a tumor containing tissue that has been rendered fluorescent with a sufficiently specific tracer, the edge of the high fluorescent area is likely to coincide with the margin of the tumor.

In another embodiment the border is constructed as a secondary curve that encloses a primary curve that interconnects the peripheral transition positions, and that extends at a distance outside the primary curve dependent on the type of tumor present in the tissue. The secondary curve indicates a region that should be treated or be excised. Typically this secondary curve encloses the primary curve at a predetermined distance outside the primary curve dependent on the type of tumor tissue. In an embodiment locally the distance between the secondary curve and the primary curve is smaller than the predetermined distance, so as to avoid an intersection of a specified anatomical structure.

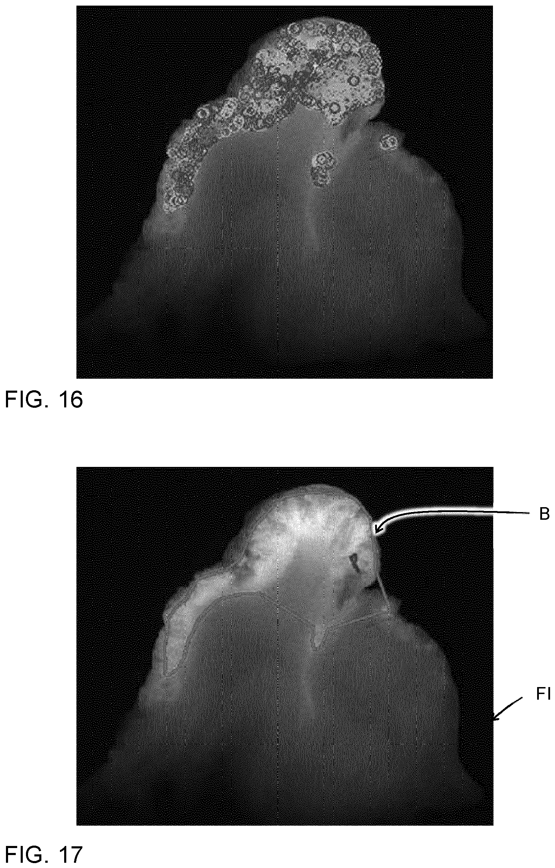

FIG. 17 shows an example of a border B constructed in the fluorescent image FI wherein the border construction section 155 directly constructs a border from a set $\{pt\}^a$ (see FIG. 16) of candidate border positions retrieved from candidate border position filter section 150. The border construction section 155 therewith applied the MatLab function boundary (x,y,s) with s = 0.5 to a filtered set $\{pt\}^a$ (see FIG. 16) of candidate border positions retrieved from candidate border position filter section 150. This function constructs a boundary that interconnects the peripheral candidate border positions. The shape of the constructed boundary is intermediate between a shape that tightly follows all peripheral candidate border positions and a convex hull around the peripheral candidate border positions.

EXAMPLE II

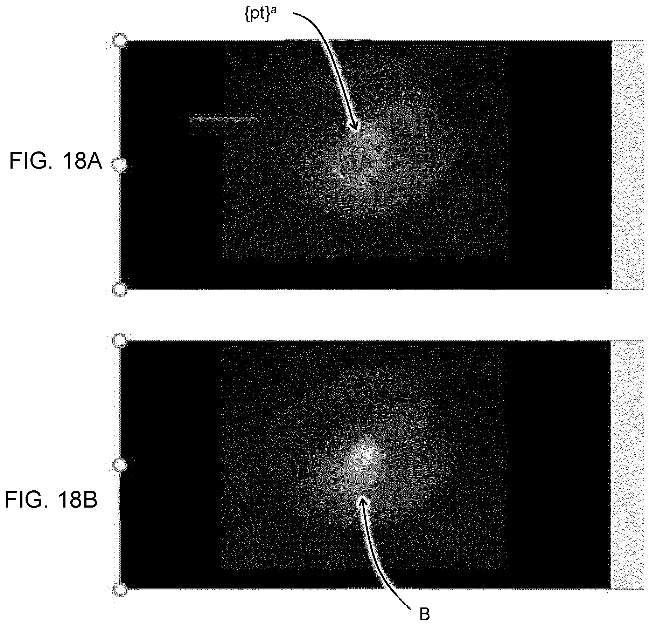

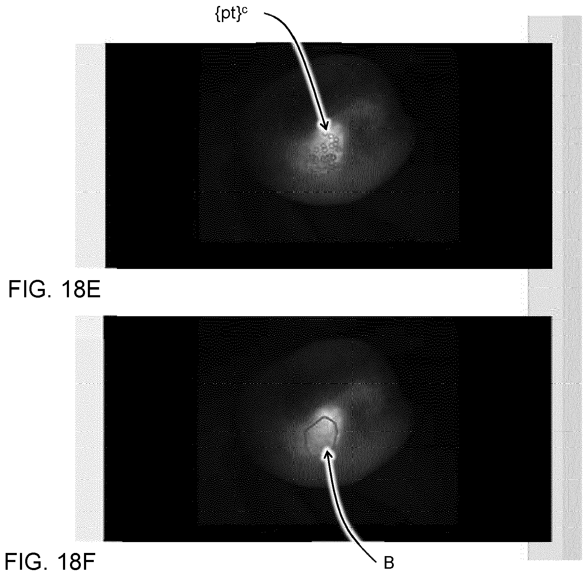

FIG. 18A,...,FIG. 18F show exemplary results obtained for a fluorescent image obtained in vivo from tissue of a patient. In this case the tissue comprised a penile squamous cell carcinoma and the tissue was rendered fluorescent with the tracer Cetuximab-IRDye800CW.

FIG. 18A shows the filtered set $\{pt\}^a$ of candidate border positions as output by the candidate border position filter section 150 superposed on the original fluorescent image FI. FIG. 18B shows superposed on the fluorescent image a border B directly constructed from the filtered set $\{pt\}^a$ of candidate border positions retrieved from candidate border position filter section 150.

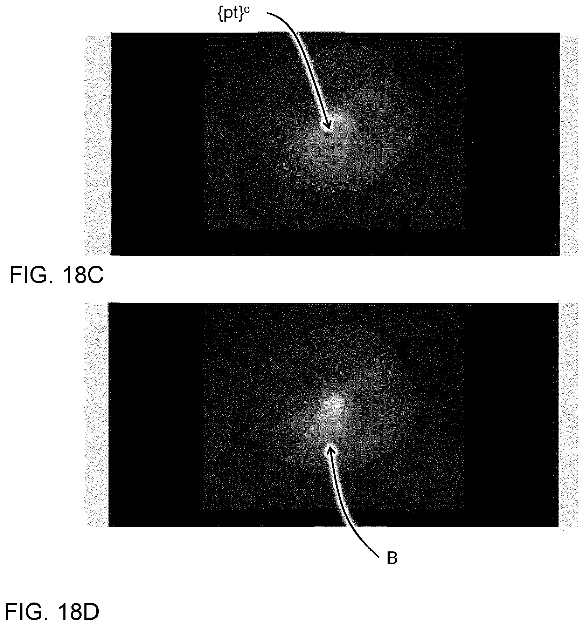

FIG. 18C shows, superposed on the fluorescent image a set $\{pt\}^c$ of candidate border positions retrieved from further candidate border position matching section 152.

FIG. 18D shows superposed on the fluorescent image a border B constructed from set $\{pt\}^c$ of candidate border positions shown in FIG. 18C.

FIG. 18E shows, superposed on the fluorescent image a set $\{pt\}^n$ of candidate border positions retrieved from the candidate border position merging section 153.

FIG. 18F shows superposed on the fluorescent image a border B constructed from set $\{pt\}^n$ of candidate border positions shown in FIG. 18E.

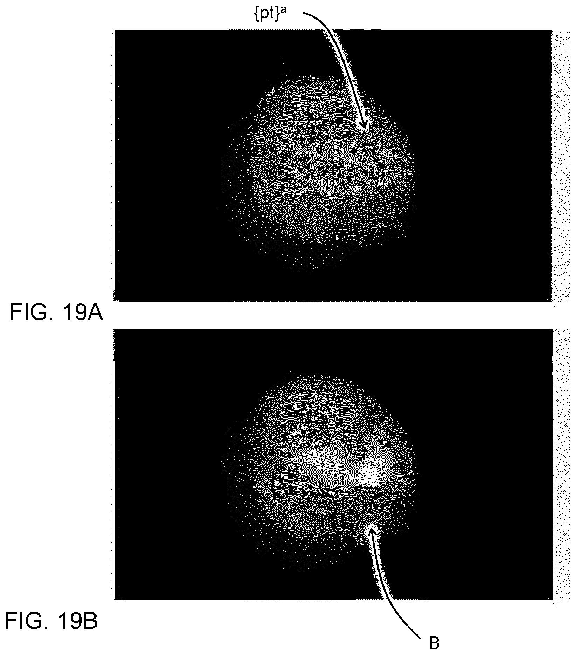

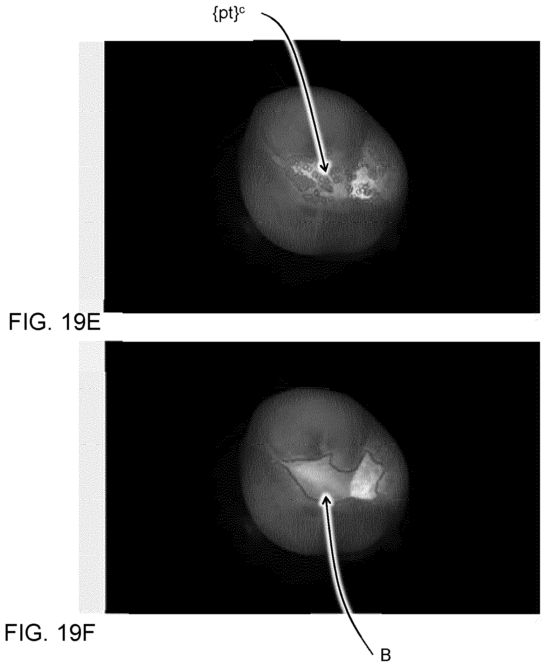

FIG. 19A,...,FIG. 19F show further exemplary results obtained for a fluorescent image obtained ex vivo from the complete tissue resected from the patient.

FIG. 19A shows the filtered set $\{pt\}^a$ of candidate border positions as output by the candidate border position filter section 150 superposed on the original fluorescent image FI. FIG. 19B shows superposed on the fluorescent image a border B directly constructed from the filtered set $\{pt\}^a$ of candidate border positions retrieved from candidate border position filter section 150.

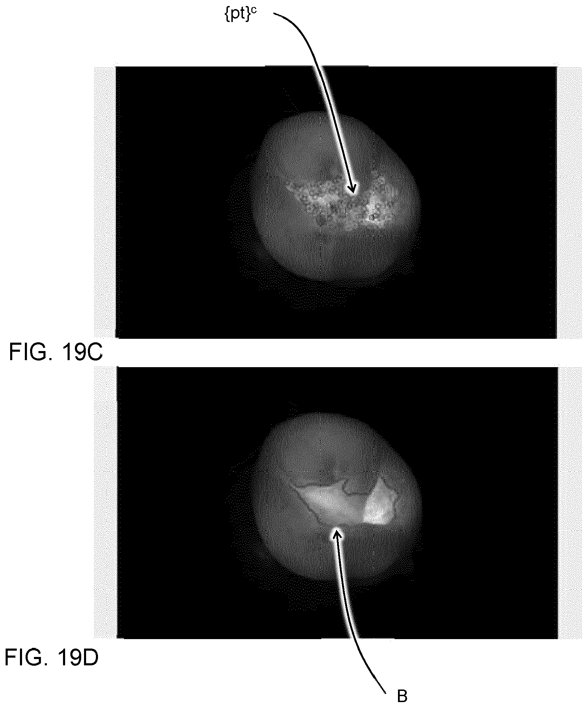

FIG. 19C shows, superposed on the fluorescent image a set $\{pt\}^c$ of candidate border positions retrieved from further candidate border position matching section 152. FIG. 19D shows superposed on the fluorescent image a border B constructed from set $\{pt\}^c$ of candidate border positions shown in FIG. 19C.

FIG. 19E shows, superposed on the fluorescent image a set $\{pt\}^n$ of candidate border positions retrieved from the candidate border position merging section 153.

FIG. 19F shows superposed on the fluorescent image a border B constructed from set $\{pt\}^n$ of candidate border positions shown in FIG. 19E.

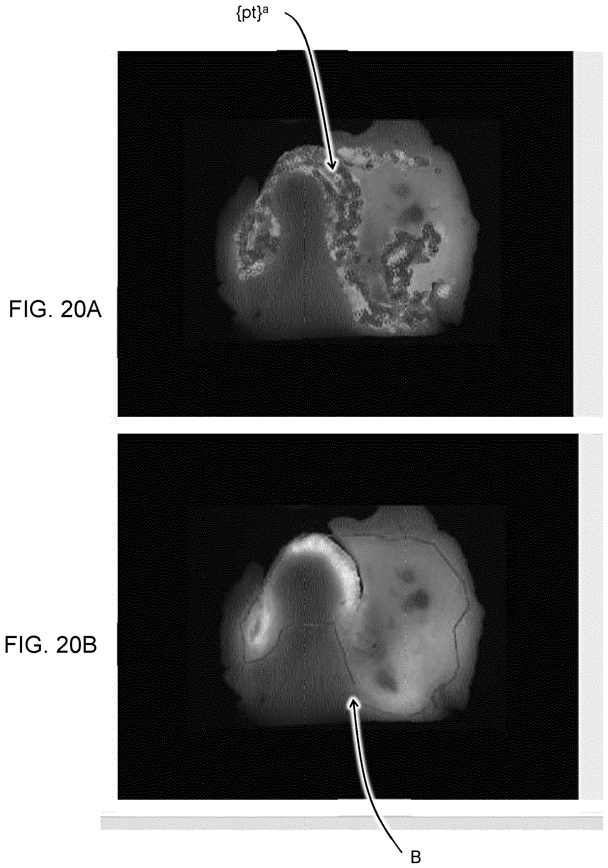

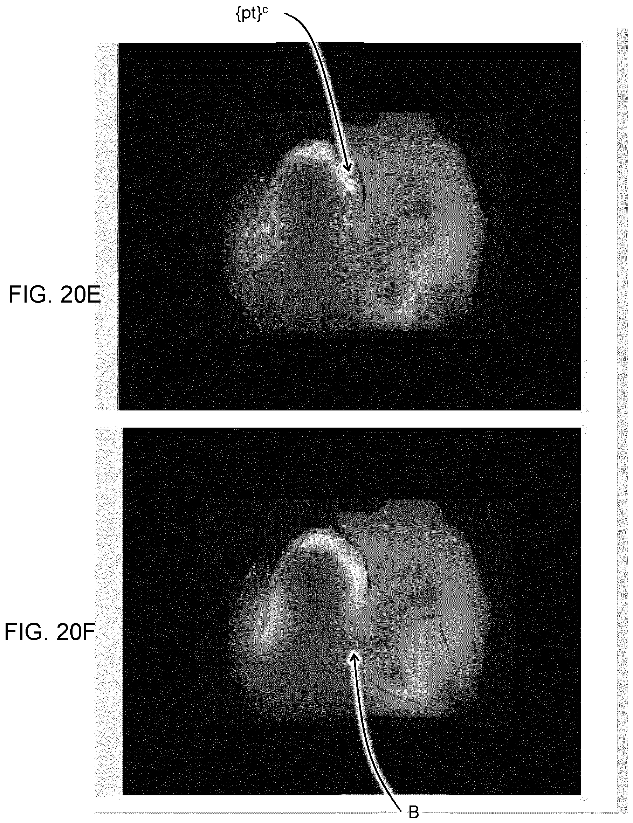

FIG. 20A,...,FIG. 20F show further exemplary results obtained for a fluorescent image obtained ex vivo from a slice of the resected tissue.

FIG. 20A shows the filtered set $\{pt\}^a$ of candidate border positions as output by the candidate border position filter section 150 superposed on the original fluorescent image FI. FIG. 20B shows superposed on the fluorescent image a border B directly constructed from the filtered set $\{pt\}^a$ of candidate border positions retrieved from candidate border position filter section 150.

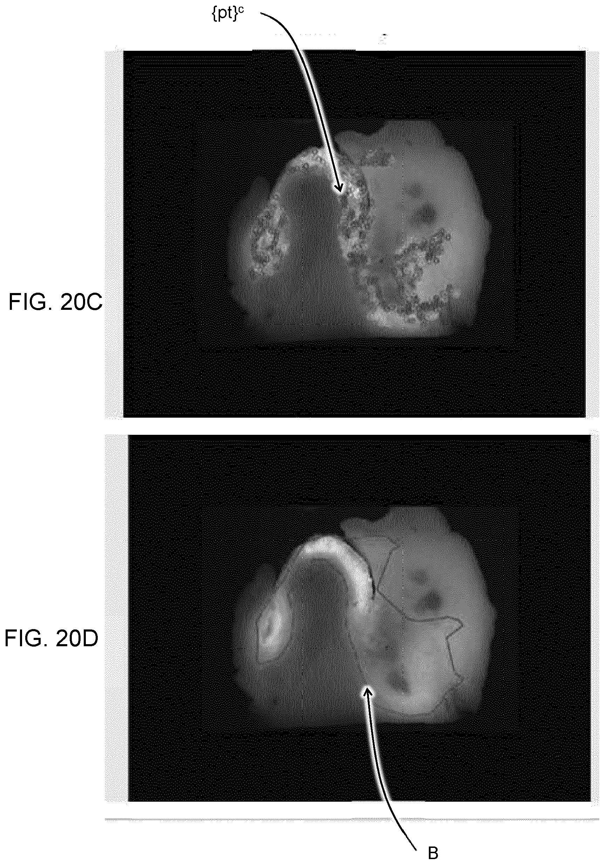

FIG. 20C shows, superposed on the fluorescent image a set $\{pt\}^c$ of candidate border positions retrieved from further candidate border position matching section 152.

FIG. 20D shows superposed on the fluorescent image a border B constructed from set $\{pt\}^c$ of candidate border positions shown in FIG. 20C.

FIG. 20E shows, superposed on the fluorescent image a set $\{pt\}^n$ of candidate border positions retrieved from the candidate border position merging section 153.

FIG. 20F shows superposed on the fluorescent image a border B constructed from set $\{pt\}^n$ of candidate border positions shown in FIG. 20E.

From the exemplary results presented in this example, it was concluded that the border B constructed from the filtered set $\{pt\}^a$ of candidate border positions best matched the margin of the tumor indicated by a pathologist. For example for the fluorescent image obtained in vivo the border constructed as shown in FIG. 18B provides the best correspondence with analysis of a pathologist.

EXAMPLE III

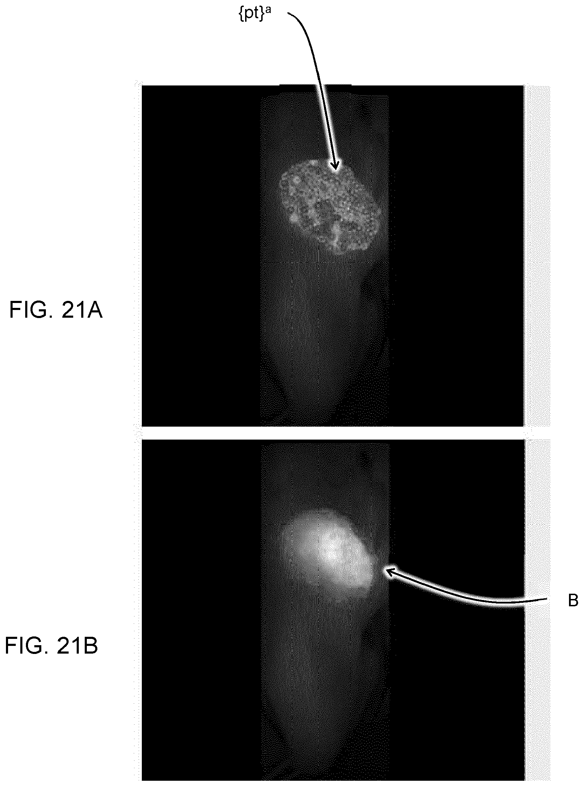

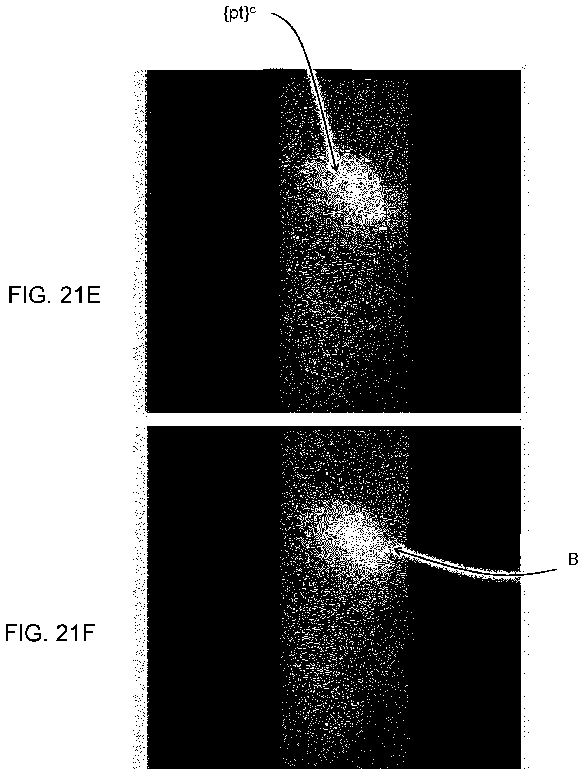

FIG. 21A,...,FIG. 21F show exemplary results obtained for a fluorescent image obtained in vivo from tissue of a patient comprising a head and neck squamous cell carcinoma rendered fluorescent with the tracer Cetuximab-IRDye800CW.

FIG. 21A shows the filtered set $\{pt\}^a$ of candidate border positions as output by the candidate border position filter section 150 superposed on the original fluorescent image FI. FIG. 21B shows superposed on the fluorescent image a border B directly constructed from the filtered set $\{pt\}^a$ of candidate border positions retrieved from candidate border position filter section 150.

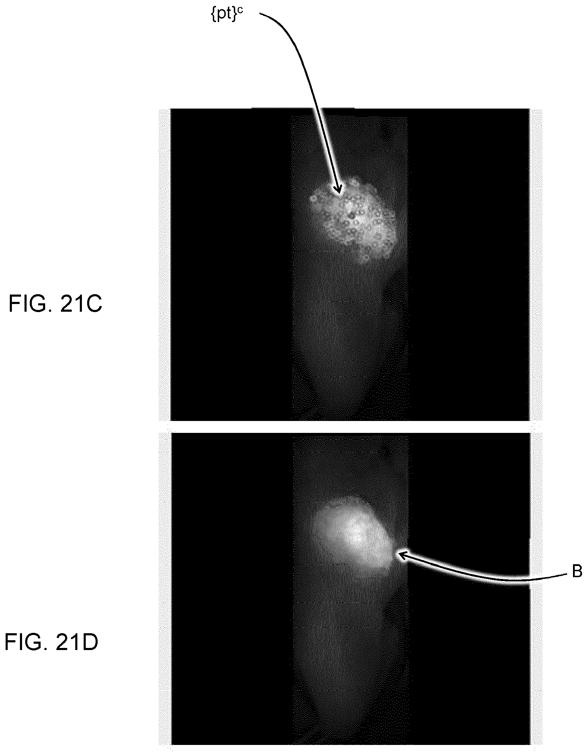

FIG. 21C shows, superposed on the fluorescent image a set $\{pt\}^c$ of candidate border positions retrieved from further candidate border position matching section 152. FIG. 21D shows superposed on the fluorescent image a border B constructed from set $\{pt\}^c$ of candidate border positions shown in FIG. 21C.

FIG. 21E shows, superposed on the fluorescent image a set $\{pt\}^n$ of candidate border positions retrieved from the candidate border position merging section 153.

FIG. 21F shows superposed on the fluorescent image a border B constructed from set $\{pt\}^n$ of candidate border positions shown in FIG. 21E.

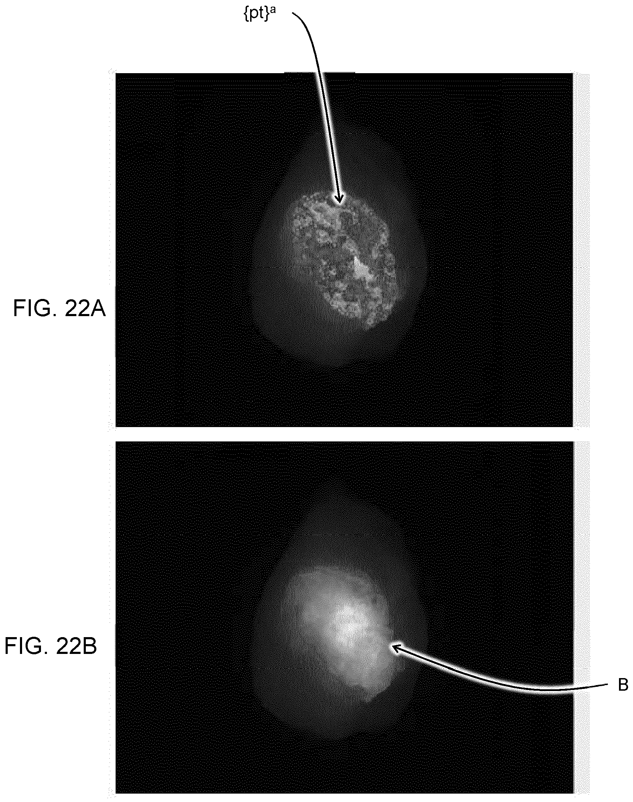

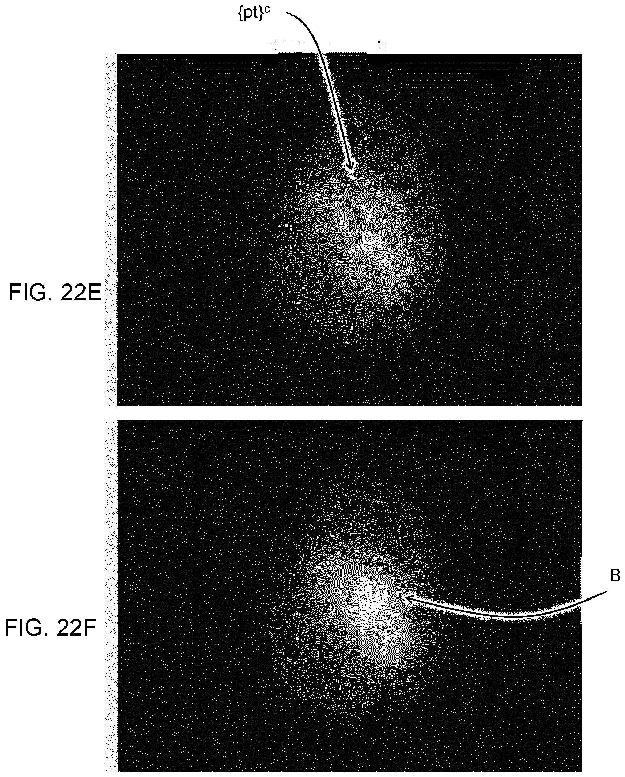

FIG. 22A,...,FIG. 22F show further exemplary results obtained for a fluorescent image obtained ex vivo from the complete tissue resected from the patient.

FIG. 22A shows the filtered set $\{pt\}^a$ of candidate border positions as output by the candidate border position filter section 150 superposed on the original fluorescent image FI. FIG. 22B shows superposed on the fluorescent image a border B directly constructed from the filtered set $\{pt\}^a$ of candidate border positions retrieved from candidate border position filter section 150.

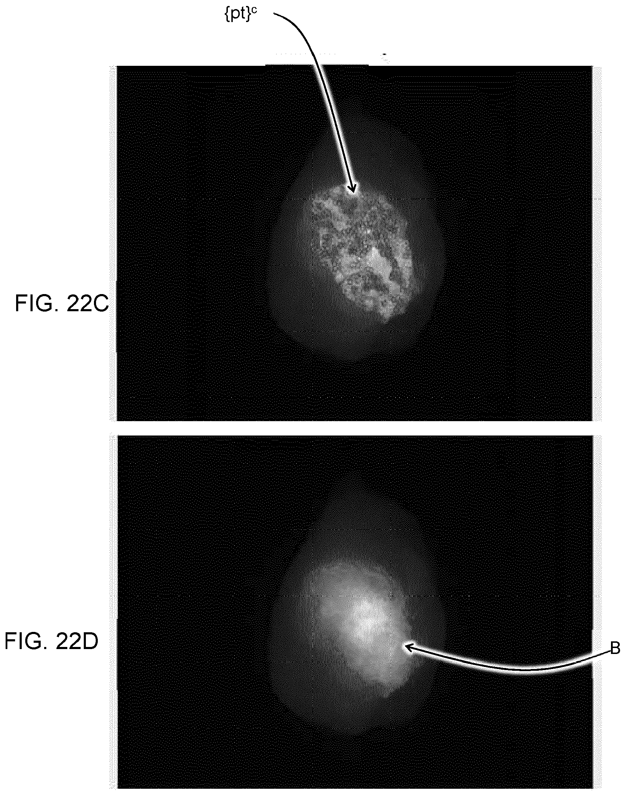

FIG. 22C shows, superposed on the fluorescent image a set $\{pt\}^c$ of candidate border positions retrieved from further candidate border position matching section 152. FIG. 22D shows superposed on the fluorescent image a border B constructed from set $\{pt\}^c$ of candidate border positions shown in FIG. 22C.

FIG. 22E shows, superposed on the fluorescent image a set $\{pt\}^n$ of candidate border positions retrieved from the candidate border position merging section 153.

FIG. 22F shows superposed on the fluorescent image a border B constructed from set $\{pt\}^n$ of candidate border positions shown in FIG. 22E.

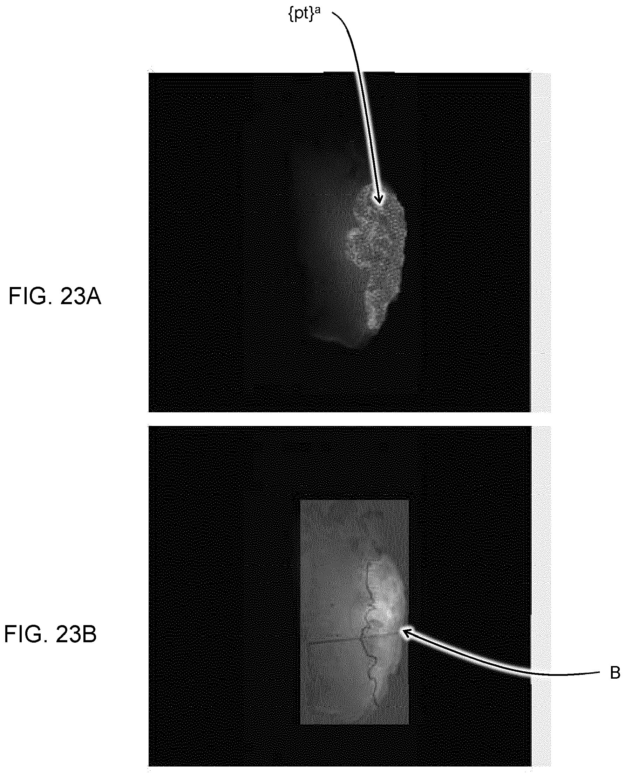

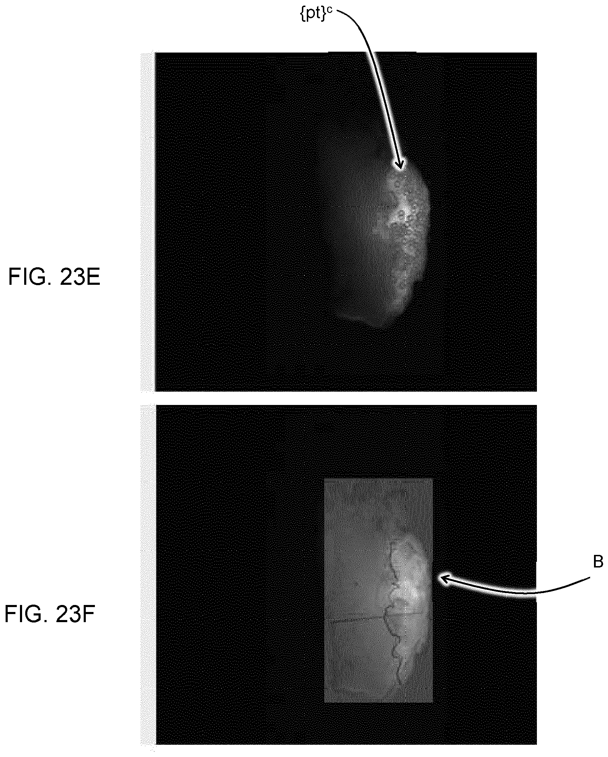

FIG. 23A,...,FIG. 23F show further exemplary results obtained for a fluorescent image obtained ex vivo from a slice of the resected tissue.

FIG. 23A shows the filtered set $\{pt\}^a$ of candidate border positions as output by the candidate border position filter section 150 superposed on the original fluorescent image FI. FIG. 23B shows superposed on the fluorescent image a border B directly constructed from the filtered set $\{pt\}^a$ of candidate border positions retrieved from candidate border position filter section 150.

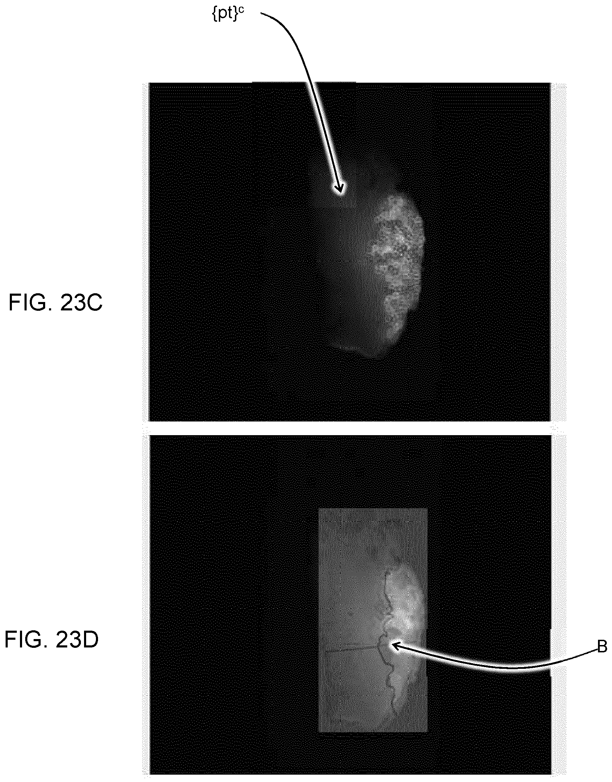

FIG. 23C shows, superposed on the fluorescent image a set $\{pt\}^c$ of candidate border positions retrieved from further candidate border position matching section 152. FIG. 23D shows superposed on the fluorescent image a border B constructed from set $\{pt\}^c$ of candidate border positions shown in FIG. 23C.

FIG. 23E shows, superposed on the fluorescent image a set $\{pt\}^n$ of candidate border positions retrieved from the candidate border position merging section 153.

FIG. 23F shows superposed on the fluorescent image a border B constructed from set $\{pt\}^n$ of candidate border positions shown in FIG. 23E.

From the exemplary results presented in example III, it was concluded that the border B constructed from the filtered set $\{pt\}^a$ of candidate border positions best matched the margin of the tumor indicated by a pathologist. For example for the fluorescent image obtained in vivo the border constructed as shown in FIG. 21B provides the best correspondence with analysis of a pathologist.

EXAMPLE IV

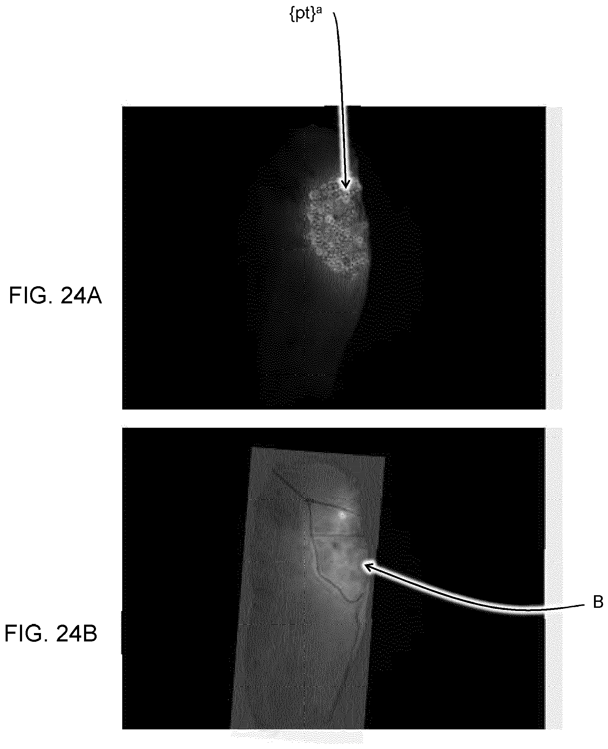

FIG. 24A to 24F show results for a fluorescent image obtained from a slice of tissue comprising a tongue carcinoma rendered fluorescent with the tracer ONM-100. ONM-100 consists of polymeric micelles labeled with Indo-Cyanine Green (ICG). Chemically, the ONM-100 drug substance comprises a diblock copolymer of polyethylene glycol (PEG) (-113 repeating units) and a poly(methyl methacrylate) derivative covalently conjugated to functionalized ICG as the fluorophore. The ICG content was determined by a qualified method from its molecular weight of $37.5 \pm 12.5$ kD.

FIG. 24A shows the filtered set $\{pt\}^a$ of candidate border positions as output by the candidate border position filter section 150 superposed on the original fluorescent image FI. FIG. 24B shows superposed on the fluorescent image a border B directly constructed from the filtered set $\{pt\}^a$ of candidate border positions retrieved from candidate border position filter section 150.

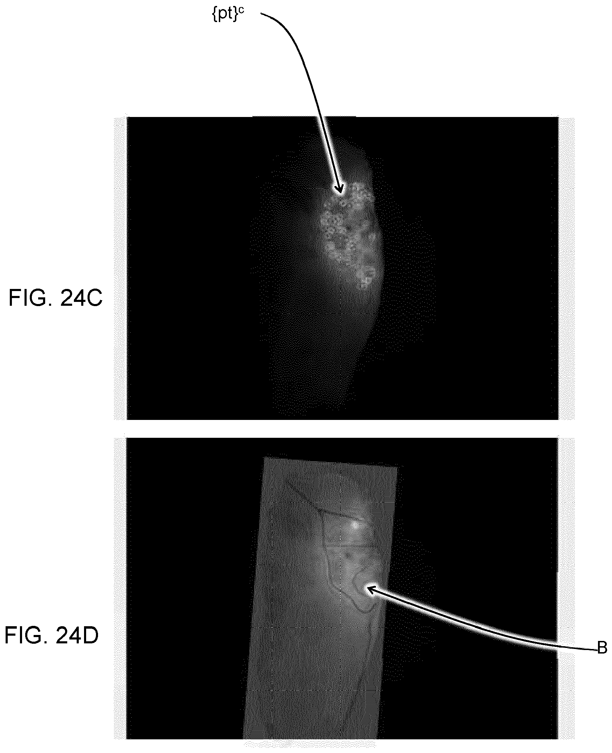

FIG. 24C shows, superposed on the fluorescent image a set $\{pt\}^c$ of candidate border positions retrieved from further candidate border position matching section 152. FIG. 24D shows superposed on the fluorescent image a border B constructed from set $\{pt\}^c$ of candidate border positions shown in FIG. 24C.

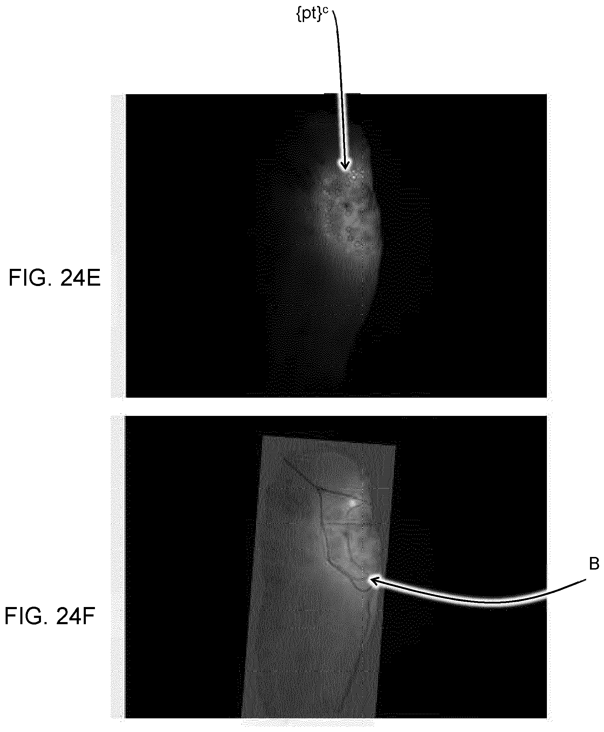

FIG. 24E shows, superposed on the fluorescent image a set $\{pt\}^n$ of candidate border positions retrieved from the candidate border position merging section 153.

FIG. 24F shows superposed on the fluorescent image a border B constructed from set $\{pt\}^n$ of candidate border positions shown in FIG. 24E.

**Claims**

1. An image processing device (1) to process a fluorescent image obtained from a tissue of a subject being irradiated with excitation light, which tissue is rendered photosensitive with a fluorescent agent, the fluorescent image (FI) comprising an array of pixels having respective fluorescent signal values;

   the image processing device being configured to perform the following operations for indicating a border in the fluorescent image between a target region representing a portion of the tissue comprising a tumor and a reference region outside the target region:

   obtaining respective fluorescent signal vectors ($F_L(...)$) for respective scan trajectories (L), respective values of a respective fluorescent signal vector ($F_L(...)$) being an indication of a magnitude of the fluorescent signal in the fluorescent image (FI) at respective positions (p) of the scan trajectory (L);

   evaluating respective modified contrast to noise ratio vectors ($CNR_{LM}(...)$) for respective fluorescent signal vectors ($F_L(...)$), respective values of respective contrast to noise ratio vectors ($CNR_{LM}(...)$ being computed for respective positions (p) of the scan trajectory (L) as

$$CNR_{LM}(p) = \frac{F_L(p) - F_B - c \cdot S}{c \cdot S}$$

   , wherein $F_B$ is a reference fluorescent signal being an average value of reference fluorescent signal values of the fluorescent image, S being a standard deviation of the reference fluorescent signal values and c being a predetermined constant;

   identifying a respective set of transition positions (pt) along each scan trajectory where the modified contrast to noise ratio vector ($CNR_{LM}(...)$ ) has a zero-crossing;

   indicating the border based on the set of transition positions obtained for the respective scan trajectories.

2. The image processing device (1) according to claim 1, configured to indicate the border as a primary curve (B) that interconnects peripheral ones of the transition positions.

3. The image processing device (1) according to claim 1, configured to indicate the border as a secondary curve (B') that encloses a primary curve that interconnects the peripheral ones of the transition positions, and that extends at a distance outside the primary curve dependent on the type of tumor present in the tissue.

4. The image processing device (1) according to claim 3, configured to construct the secondary curve (B') in a manner that avoids an intersection of a specified anatomical structure.

5. The image processing device (1) according to any of the preceding claims, wherein the indication $F_L(p)$ of the magnitude of the fluorescent signal in the fluorescent image (FI) at the position (p) of the scan trajectory (L) is an average value of fluorescent signal values of pixels in the fluorescent image (FI) within a one-dimensional window comprising the position (p) and being directed transverse to a direction of the scan trajectory.

6. The image processing device (1) according to claim 5, wherein the average value is a weighted sum of the fluorescent signal values of the pixels within a one-dimensional window in accordance with a Gaussian function having its maximum at the position (p) of the scan trajectory (L).

7. The image processing device (1) according to any of the preceding claims, configured to repeat the following steps for each of a plurality of positions along the scan trajectory:

   tentatively assign a position (ps) from said plurality of positions along the scan trajectory as a presumed point of the border indicating the border of the target region;
   compute the reference fluorescent signal value ($F_B$) as the average of the fluorescent signal values of the fluorescent signal vector ($F_L$(...)), corresponding to positions of the scan trajectory at a side of the tentatively assigned position;
   compute the standard deviation (S) as the standard deviation of said fluorescent signal values;
   identifying a tentatively assigned position as a candidate border position if the modified contrast to noise ratio vector ($CNR_{LM}$(...) ) has a zero-crossing at the tentatively assigned position.

8. The image processing device (1) according to claim 7, further being configured to perform a low-pass filtering of the modified contrast to noise ratio vector.

9. The image processing device (1) according to any of the preceding claims, wherein the respective scan trajectories comprise at least two scan trajectories with a mutually different direction.

10. The image processing device (1) of claim 1, 2 or 3, wherein the fluorescent image (FI) is obtained from a tissue sample taken from the subject and arranged on a background and wherein the image processing device (1) is configured to identify an area in the fluorescent image that represents the tissue sample as the tissue area and to identify an area in the fluorescent image (FI) of the background as the background area.

11. The image processing device (1) of claim 10, further being configured to determine a first maximum intensity in the tissue area of the fluorescent image (FI), to determine a second maximum intensity along a scan trajectory and to skip further processing steps for the scan trajectory if the second maximum intensity is less than a predetermined fraction of the first maximum intensity.

12. The image processing device (1) according to any of the preceding claims, wherein the predetermined constant c is 2.

13. The image processing device (1) according to any of the preceding claims, comprising a camera (2) for obtaining a fluorescent image (FI) from tissue in a subject, which subject has been administered a fluorescent agent, and comprising a display device (3) to display the tissue and the constructed border.

14. A medical treatment device (100) comprising a camera (2) for obtaining a fluorescent image (FI) from tissue in a subject, which subject has been administered a fluorescent agent, an image processing device (1) according to one of the claims 1-12, and treatment equipment (5) to perform a medical treatment to excise or irradiate the tumor in accordance with the constructed border.

15. The image processing device (1) according to claim 7, configured to reject a candidate border position for further processing if an indicated value for the fluorescent intensity is less than a threshold value.

16. The image processing device (1) according to claim 15, wherein the indicated value is the maximum of the fluorescent intensities within a window centered around the candidate border position.

FIG. 1

FIG. 2

FIG. 3

FIG. 4

FIG. 5

FIG. 6

FIG. 7A

FI

FIG. 7B

FIG. 7C

BA

TA

FIG. 8

FIG. 9A

FIG. 9B

L1

Ln

FIG. 10A

α = 0

FIG. 10B

α = 45

FIG. 10C

α = 90

FIG. 11A

FIG. 11B

FIG. 12A

FIG. 12B

FIG. 13A

FIG. 13B

FIG. 14

FIG. 15

FIG. 16

FIG. 17

FIG. 18A

FIG. 18B

{pt}$^c$

FIG. 18C

B

FIG. 18D

{pt}$^c$

FIG. 18E

FIG. 18F                                                    B

FIG. 19A

FIG. 19B

FIG. 19C

FIG. 19D

{pt}ᶜ

FIG. 19E

FIG. 19F

B

EP 4 411 635 A1

FIG. 20A

FIG. 20B

38

FIG. 20C

FIG. 20D

{pt}$^c$

FIG. 20E

FIG. 20F

B

FIG. 21A

FIG. 21B

{pt}$^c$

FIG. 21C

FIG. 21D

B

FIG. 21E

FIG. 21F

{pt}ᵃ

FIG. 22A

FIG. 22B

B

FIG. 22C

FIG. 22D

{pt}ᶜ

FIG. 22E

FIG. 22F

B

{pt}$^a$

FIG. 23A

FIG. 23B

B

{pt}$^c$

FIG. 23C

FIG. 23D

B

{pt}$^c$

FIG. 23E

B

FIG. 23F

FIG. 24A

FIG. 24B

{pt}<sup>c</sup>

FIG. 24C

FIG. 24D

B

{pt}<sup>c</sup>

FIG. 24E

FIG. 24F

B

Europäisches
Patentamt

European
Patent Office

Office européen
des brevets

# EUROPEAN SEARCH REPORT

**Application Number**

EP 23 15 4545

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SUHAIL M ODEH ET AL: "Skin Lesion Diagnosis Using Fluorescence Images", 1 January 2006 (2006-01-01), IMAGE ANALYSIS AND RECOGNITION LECTURE NOTES IN COMPUTER SCIENCE;;LNCS, SPRINGER, BERLIN, DE, PAGE(S) 648 - 659, XP019043823, ISBN: 978-3-540-44894-5 * abstract * * page 3 - page 5 * | 1-16 | INV. G06T7/13 G06T7/12 |
| A | LI L ET AL: "Improved Method for Automatic Identification of Lung Regions on Chest Radiographs", ACADEMIC RADIOLOGY, ELSEVIER, AMSTERDAM, NL, vol. 8, no. 7, 1 July 2001 (2001-07-01), pages 629-638, XP027112680, ISSN: 1076-6332 [retrieved on 2001-07-01] * abstract; figure 3 * | 1-16 | |
| A | US 4 972 262 A (NICHOLS STEVEN C [US]) 20 November 1990 (1990-11-20) * abstract; figure 1 * | 1-16 | TECHNICAL FIELDS SEARCHED (IPC) G06T |

The present search report has been drawn up for all claims

| Place of search | Date of completion of the search | Examiner |
|---|---|---|
| Munich | 7 July 2023 | Katsoulas, Dimitrios |

EPO FORM 1503 03.82 (P04C01)

EP 4 411 635 A1

## ANNEX TO THE EUROPEAN SEARCH REPORT
## ON EUROPEAN PATENT APPLICATION NO.

EP 23 15 4545

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2023

| Patent document cited in search report | | Publication date | Patent family member(s) | Publication date |
|---|---|---|---|---|
| US 4972262 | A | 20-11-1990 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **OROSCO, R. K. et al.** Positive surgical margins in the 10 most common solid cancers. *Sci. Rep,* 2018, vol. 8, 56-86, https://doi.org/10.1038/s41598-018-23403-5

- **VOSKUIL et al.** Intraoperative imaging in pathology-assisted surgery. *Nat Biomed Eng,* 2022, vol. 6, 503, https://doi.org/10.1038/s41551-021-00808-8